# EUROPEAN PATENT SPECIFICATION

(11) **EP 3 407 117 B1**
(45) Date of publication and mention of the grant of the patent: **24.11.2021**
(21) Application number: 18174266.9
(22) Date of filing: 25.05.2018
(51) Int. Cl.: G02B 27/10, G02B 27/48, G02B 27/28, G02B 27/00, G03B 21/20, G02B 26/08, G03B 21/00

(54) **SCANNING PROJECTOR**
ABTASTPROJEKTOR
PROJECTEUR À BALAYAGE

(30) Priority: 26.05.2017 KR 20170065605
(43) Date of publication of application: 28.11.2018
(73) Proprietor: LG Electronics Inc., Seoul 07336 (KR)
(72) Inventor: LIM, Jaehyuk, 06772 Seoul (KR); KWON, Jaewook, 06772 Seoul (KR); KIM, Jideok, 06772 Seoul (KR); PARK, Woojae, 06772 Seoul (KR)
(74) Representative: Schornack, Oliver

(56) References cited:
- EP-A2- 0 558 249
- JP-A- H 055 817
- US-A1- 2005 117 188
- US-A1- 2012 275 002
- US-A1- 2012 300 276
- US-A1- 2015 249 521

## Description

### CROSS-REFERENCE TO RELATED APPLICATION

This application claims the priority benefit of Korean Patent Application No. 10-2017-0065605, filed on May 26, 2017 in the Korean Intellectual Property Office.

### BACKGROUND OF THE INVENTION

### 1. Field of the Invention

The present invention relates to a scanning projector and a shelf display module including the same. More particularly, the present invention relates to a scanning projector for displaying information about stores and merchandise, and a shelf display module including the same.

### 2. Description of the Related Art

Generally, a display stand has one or more shelves to display products or merchandise thereon. Shelves used for only displaying goods have a structure specifically designed to stack merchandise, since the shelves serve no other purpose.

Printed paper materials, decorations, or the like, which include information about stores or products displayed on the shelves, may be attached on the front or the top of the shelves. However, there is a limitation on the types and amounts of information that can be provided to customers, and it is inconvenient to update such information.

Accordingly, a display stand and a display method have been suggested, which provide various types of information by using a specific display device disposed on the front or the top of the shelves. For example, a projector can be used to project images, such as a projector for a presentation given in a conference room, a commercial movie theater projector, a home theater projector, etc.

In addition, a scanning projector generates an image on a screen by scanning light using a scanner. Such a scanning projector has the advantage of easily realizing a large-scale screen in comparison with other display devices, and is increasingly used for various display purposes.

US 2015/0249521 A1 relates to a display unit including a light source section, a polarization splitting multiplexing device allowing a laser beam from the light source section to pass therethrough, and a micro electro mechanical system (MEMS) mirror as a scanning section. The light source section includes a laser light source, a collimating section, and a color multiplexing section. The polarization splitting multiplexing device includes a pair of optical elements, wherein a half-wavelength plate can be provided between the optical elements.

### SUMMARY OF THE INVENTION

Accordingly, one object of the present invention is to address the above-noted and other problems.

Another object of the present invention is to provide a scanning projector which realizes high-quality images, and a shelf display module including the scanning projector.

Still another object of the present invention is to provide a scanning projector which realizes a large-scale screen with low-power, and a shelf display module including the scanning projector.

Yet another object of the present invention is to provide a structure of a scanning projector which reduces speckle and has a compact design.

Another object of the present invention is to provide a structure of a scanning projector having excellent heat dissipation and assembly properties.

To achieve these and other advantages and in accordance with the purpose of the present invention, as embodied and broadly described herein, the present invention provides a scanning projector as defined in claim 1. Preferred embodiments are defined by the dependent claims.

### ADVANTAGES OF THE INVENTION

Advantages of the scanning projector and the shelf display module according to an embodiment of the present invention are as follows. For example, high-quality images without distortion can be provided and a large-scale screen with low-power can be realized.

In addition, speckle produced by laser light can be reduced, and a scanning projector having a compact design can be provided. Further, a scanning projector having excellent heat and assembly properties can be provided.

Further scope of applicability of the present invention will become apparent from the detailed description given hereinafter. However, the detailed description and specific examples are given by illustration only.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
FIGS. 1 to 4 are diagrams illustrating a shelf display module according to an embodiment of the present invention.
FIG. 5 is a diagram illustrating a display image of a shelf display module according to an embodiment of the present invention.
FIG. 6 is an exploded perspective view of a shelf display module according to an embodiment of the present invention.
FIG. 7 is a conceptual diagram illustrating a scanning projector.
FIG. 8 is an internal structure diagram schematically illustrating a scanning projector.
FIG. 9 is a diagram illustrating an example of drive signal waveforms of a scanning projector.
FIG. 10 is an internal block diagram schematically illustrating a scanning projector according to an embodiment of the present invention.
FIG. 11 is an exploded perspective view of a scanning projector according to an embodiment of the present invention.
FIGS. 12 to 25 are diagrams illustrating a structure and operation of an optical engine.
FIG. 26 is a diagram illustrating a display stand according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. However, it will be understood that the present invention should not be limited to the embodiments and may be modified in various ways.

In the following description of the present invention, the suffixes "module" and "unit" that are mentioned in the elements used to describe the present invention are merely used for the purpose of simplifying the description of the present invention, and thus the suffix itself is not assigned a particularly significant meaning or function. Therefore, the suffixes "module" and "unit" may also be alternately used to refer to a specific element of the present invention.

A shelf display module according to an embodiment of the present invention includes a projector. Further, a scanning projector, which projects an image using an optical scanner, can be used as the projector.

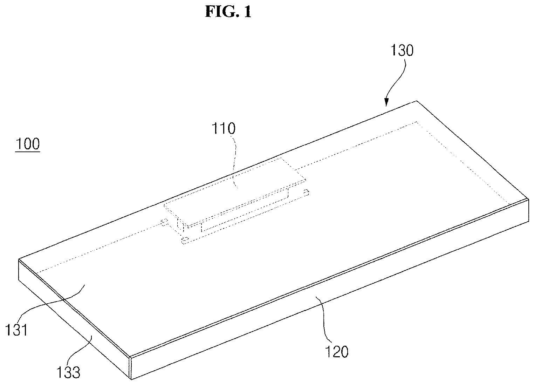

In more detail, FIGS. 1 to 4 are diagrams illustrating a shelf display module 100 according to an embodiment of the present invention. Referring to FIGS. 1 to 4, the shelf display module 100 includes a shelf case 130 having an accommodation space; a screen 120 disposed on a front surface of the accommodation space; and a projector 110 which projects a predetermined image onto the screen 120. Here, the screen 120 may be spaced apart from the projector 110 by a predetermined distance in an image projecting direction, namely a direction forward of the accommodation space.

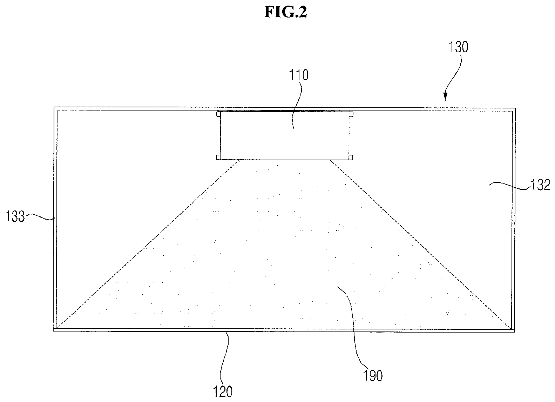

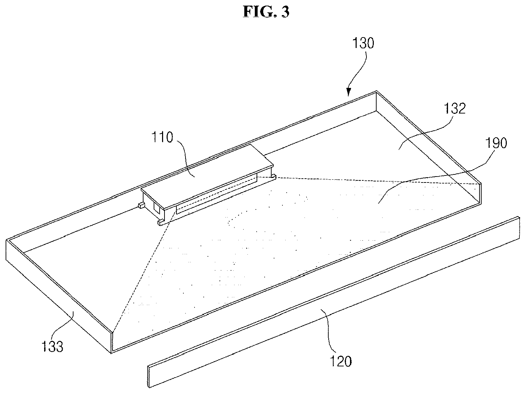

FIG. 1 illustrates an upper case 131 of the shelf case 130 in order to show an outer appearance of the shelf display module 100. However, the upper case 131 is not illustrated in FIGS. 2 and 3, which show an internal accommodation space. Further, merchandise can then be placed on and supported by the upper case 131 of the shelf case 130.

Further, a lower case 132 of the shelf case 130 forms an internal accommodation space along with the upper case 131, fixes the projector 110, and supports the upper case 131 and a side plate 133. A top surface of the lower case 132 forms an internal bottom surface of the accommodation space, and the projector 110 is disposed on the internal bottom surface thereof.

In addition, the side plate 133 of the shelf case 130 may be formed either integrally with or separately from the lower case 132, and can serve to support merchandise along with the upper case 131 and the lower case 132. The projector 110 is also disposed in the internal accommodation space of the shelf case 130. Also, the screen 120 is disposed in front of the projector 110 at a position spaced apart from the projector 110 by a predetermined distance, namely in an image projecting direction, and displays an image projected from the projector 110.

Currently, a paper price tag is mostly used to indicate prices or information of products in retail markets such as supermarkets, department stores, and the like. However, the paper tag has to be frequently manually changed by store clerks, for example. Errors also frequently occur in the process.

As an alternative to the paper tag, methods of using various display units have been suggested. For example, by using an Electronic Shelf Label (ESL), the price information can be updated on a central server. However, the ESL has drawbacks in that the ESL, using e-ink, is represented only in solid color, such as black, gray, red, and the like, and displays only still images, thus lowering visibility.

Further, the Liquid Crystal Display (LCD) module has drawbacks in that a large facility investment is required in order to provide an elongated screen of the display stand, and power consumption is high. Further, the LCD is often damaged when a cart collides with the LCD, and the costs related to replacing the damaged LCD is high.

In order to solve the above problems of displaying shelf prices, the present invention displays product information and the like by using a projector. Particularly, the projector and the shelf display module according to an embodiment of the present invention can realize a large screen with low power consumption by using a Micro-Electro-Mechanical-System (MEMS) scanner, and not only product prices but also information (e.g., place of origin) of displayed products and images can be displayed.

Referring to FIGS. 2 to 4, the shelf display module includes the projector 110, the screen 120, and the shelf case 130. Further, the projector 110 includes an optical engine having optical components, such as a MEMS scanner, a laser light source, an optical system, and the like. The MEMS scanner can be driven vertically and horizontally, and can form a field of view (FOV) 190.

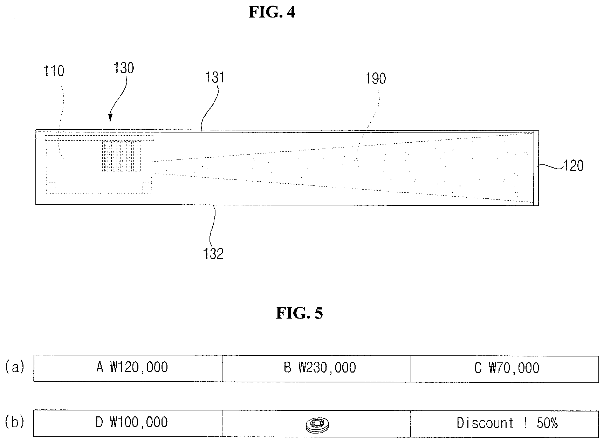

FIG. 5 is a diagram illustrating a display image of a shelf display module according to an embodiment of the present invention. Referring to FIG. 5 (a), not only a name and price information of product 'A', but also a name of product 'B' and price information of 'C' can be displayed. That is, information associated with various products can be displayed at the same time on the screen 120.

Referring to FIG. 5 (b), not only a name and price information of product 'B', but also videos or still images can be provided. The videos or still images can be images related to product 'D', its manufacturer, or stores. Further, additional information, including discount information of the specific product 'D', can also be displayed.

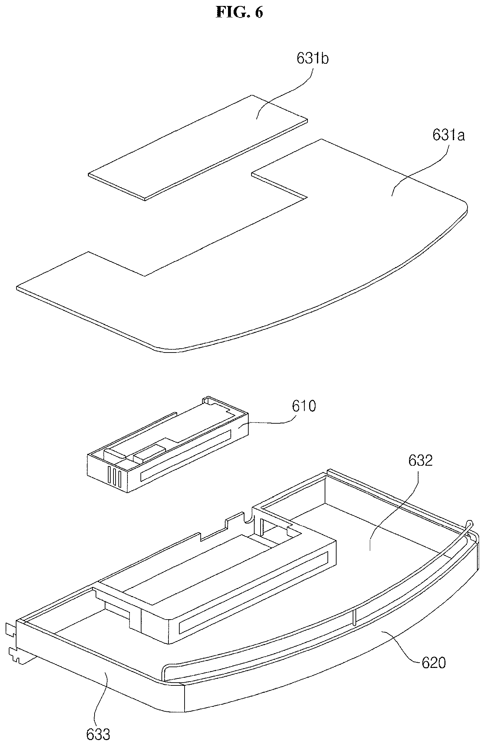

Next, FIG. 6 is an exploded perspective view of a shelf display module according to an embodiment of the present invention. Referring to FIG. 6, the shelf display module including a projector 610 includes a shelf case 631a, 631b, 632 and 633 having an internal accommodation space formed therein, and a screen 620 disposed on a front surface of the accommodation space.

The shelf case includes a lower case 632, to which the projector is fixed, and an upper case 631a which forms the accommodation space along with the lower case 632, and is detachable. The upper case 631a may have a flat shape so that merchandise can be placed thereon.

The shelf display module according to an embodiment of the present invention may further include an engine assembly cover 631b which is detachable from the upper case 631a. Accordingly, by only opening the engine assembly cover 631b without removing the entire upper case, the projector 610 and the optical engine inside the projector 610 can be checked, repaired, and replaced. Further, the position of the projector 610 can be adjusted by separating the engine assembly cover 631b from the upper case 631a.

Depending on embodiment, the shelf case may not include the engine assembly cover 631b, and the upper case 631a may be formed to be flat up to a region of the engine assembly cover 631b. The shelf case, including the upper case 631a and the lower case 632, may also have a predetermined volume and accommodate the projector 610.

Further, the shelf case or side plate 633 may be formed either integrally with or separately from the lower case 632, and may support merchandise along with the upper case 631 and the lower case 632. The side plate 633 may also include a fastening part to be assembled with a display stand or may be connected with a fastening member.

In addition, the shelf display module includes the screen 620 disposed on a front surface of the shelf case. Here, the screen 620 may be a transmissive screen. The projector 610 included in the accommodation space of the shelf case can project a specific image onto the screen 620. The projector 610 can also be disposed on an internal bottom surface of the shelf case 632. Instead of being attached to a specific position of the shelf display module, the projector 610 can be disposed and fixed to the internal bottom surface of the shelf case 632, thereby enabling the projector 610 to be further stably fixed.

The internal bottom surface 632 of the shelf case may also be a top surface of the lower case of the shelf case 632. As discussed above, the projector 610 is a scanning projector including the MEMS scanner.

In addition, in the shelf display module according to an embodiment of the present invention, one front surface of the accommodation space of the upper case 631a and the lower case 632 can be formed to have a curved shape. Further, the screen 620 can have a curved surface as illustrated in FIG. 6. In addition, the shelf display module may further include an internal compartment, a partition wall, or a reinforcing member.

Further, the MEMS scanner is driven vertically and horizontally to project light. As the distance between the MEMS scanner and the screen is constant, an image can be displayed without distortion and image processing can be easily performed. When the screen 620 and the front surface of the shelf display module are formed to be flat, the distance between the MEMS scanner and a central portion of the screen 620 is the shortest, and the distance between the MEMS scanner and both ends of the screen 620 is the longest. On both ends of the screen 620, image quality may be deteriorated, in which image brightness is reduced, an image is not completely displayed, or an image shakes.

Therefore, one front surface of the accommodation space of the upper case 631a and the lower case 632 can be formed to be a curved surface. Accordingly, the screen 620 can be disposed and fixed on a curved surface. Therefore, with the position of the MEMS scanner, included in the shelf display module, being defined as the center of a circle having a predetermined radius, the screen 620 and the front surface of the shelf display module can be disposed at a position corresponding to a portion of the circle. Accordingly, a distance between the MEMS scanner and the screen 620 is constant, and images can be produced without distortion even on both ends of the screen 620, thus preventing deterioration of image quality.

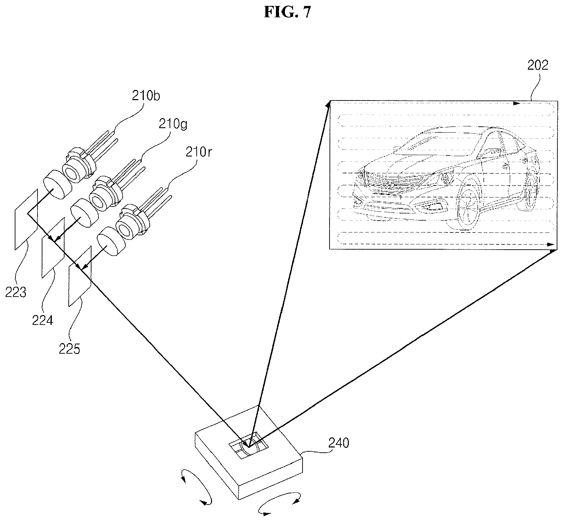

An operation of the scanning projector including the MEMS scanner will be described with reference to FIGS. 7 to 9. In particular, FIG. 7 is a conceptual diagram illustrating a scanning projector. Referring to FIG. 7, a scanner 240 in a scanning projector 110 can sequentially and repeatedly perform first directional scanning and second directional scanning of input light, and output light to an external scan area.

In more detail, FIG. 7 illustrates an example where a projection image based on visible light (RGB) is output from the scanning projector 110 onto the projection area of a screen 202. Referring to FIG. 7, the scanning projector 110 includes a plurality of light sources 210r, 210g, and 210b, a light reflection unit 223, light wavelength splitting units 224 and 225, and a scanner 240.

When light from the light sources 210r, 210g, and 210b is projected onto an external object, it is important to collimate the light. Thus, laser diodes may be used, but the light source is not limited thereto, and various examples are possible. The light sources 210r, 210g, and 210b in FIG. 7 include a blue laser diode 210b for outputting blue light, a green laser diode 210g for outputting green light, and a red laser diode 210r for outputting red light.

FIG. 7 also illustrates an example where the blue laser diode 210b having a short wavelength is disposed farthest away from the scanner 240, and the green laser diode 215r and the red laser diode 215g are sequentially disposed. As illustrated in FIG. 7, the scanning projector 110 includes three light sources 210r, 210g and 210b, but may also include a various number of light sources.

In addition, the arrangement and positions of the light sources and other optical components may vary depending on designs. For example, light output from the light source 210b may be reflected by a total mirror 223, and transmitted by the light wavelength splitting unit 224, to be incident upon the scanner 240. Further, light output from the light source 210g may be reflected by the light wavelength splitting unit 224, and transmitted by the light wavelength splitting unit 225, to be incident upon the scanner 240.

In addition, light output from the light source 210r may be reflected by the light wavelength splitting unit 225 and incident upon the scanner 240. The light wavelength splitting units 224 and 225 may also reflect or transmit light based on the wavelength of the light. For example, the light wavelength splitting units 224 and 225 may be embodied as dichroic mirrors.

When the wavelength of any one light source is shorter than the wavelength of another light source, the light wavelength splitting units 224 and 225 can transmit the light having a shorter wavelength, and reflect the light having a longer wavelength. The scanner 140 can also receive the output light from the light sources 210r, 210g and 210b, and sequentially and repeatedly perform first directional scanning and second directional scanning to the outside.

Further, the scanner 240 can receive light synthesized by a light synthesizer, and project the synthesized light in a horizontal direction and a vertical direction. For example, the scanner 240 can project the synthesized light in the horizontal direction with respect to a first line (horizontal scanning), and move vertically to a second line below the first line (vertical scanning). Subsequently, the scanner 240 can project the synthesized light in the horizontal direction with respect to the second line (horizontal scanning). Thus, the scanner 240 can project an image to be displayed onto the entirety of the screen 202.

As illustrated in FIG. 7, the scanner 240 can perform horizontal scanning from left to right, vertical scanning from top to bottom, horizontal scanning from right to left, and vertical scanning from top to bottom, of the area that can be scanned. This scanning operation can also be repeatedly performed over the entirety of the projection area.

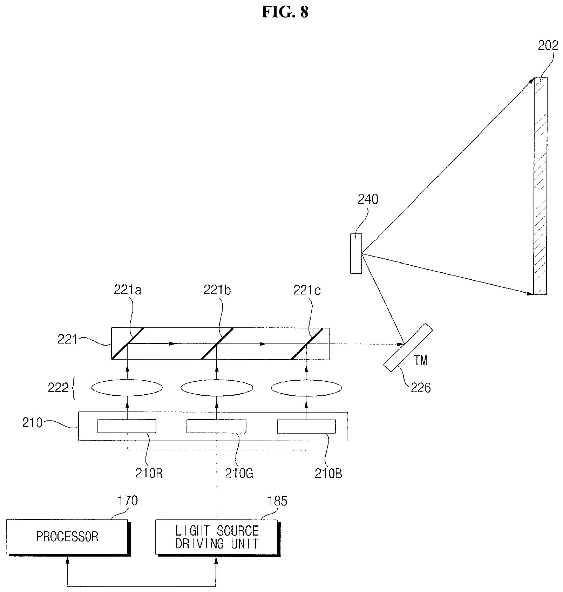

Next, FIG. 8 is an internal structure diagram schematically illustrating a scanning projector 110. Referring to FIG. 8, the scanning projector 110 includes a light source unit 210 including a plurality of light sources, i.e., a red light source unit 210R, a green light source unit 210G, and a blue light source unit 210B. The light source units 210R, 210G, and 210B may include a laser diode.

Each of the light source units 210R, 210G, and 210B can be driven by an electric signal from a light source driving unit 185. The electric signal of the light source driving unit 185 can be generated by control of the processor 170, and the light output from the light source unit 210 can be transmitted to the optical scanner 240 through the optical system.

Further, the light output from each of the light source units 210R, 210G, and 210B can be collimated through a collimating lens in a light collecting unit 222. The light synthesizer 221 then synthesizes light beams output from each of the light source units 210R, 210G, and 210B, and outputs the synthesized light in one direction.

Thus, the light synthesizer 221 may include a predetermined number of mirrors 221a, 221b, and 221c and can be named as a mirror unit including a plurality of mirrors. For example, a first light synthesizer 221a, a second light synthesizer 221b, and a third light synthesizer 221c can output red light, output from the red light source unit 210R, green light, output from the green light source unit 210G, and blue light, output from the blue light source unit 210B, respectively, in a direction of the scanner 240.

A light reflection unit 226 reflects the red light, the green light, and the blue light, which are output from the light synthesizer 221, in the direction of the scanner 240. The light reflection unit 226 reflects light of various wavelengths, and may be used as a Total Mirror (TM) for this purpose. In addition, the scanner 240 can receive visible light (RGB) from the light source unit 210, and sequentially and repeatedly perform first directional scanning and second directional scanning to the outside.

The scanner 240 can also repeatedly perform the scanning operation over the entirety of the projection area. Specifically, the visible light (RGB) output from the scanner 240 can be output onto a projection area of the screen 202. Even when the screen 202 has a free-form curved surface, the projection image can be displayed corresponding to the curved surface of the screen.

Referring to FIG. 8, the processor 170 can perform an overall control operation of the scanning projector 110. Specifically, the processor 170 can control the operation of each unit in the scanning projector 110. The processor 170 can also control a video image, which is received from an external source, to be output to an external scan area as a projection image.

In more detail, the processor 170 can control the light source driving unit 185, which controls the light source unit 210 outputting visible light such as red, green, and blue. Specifically, the processor 170 can output red, green, and blue signals, which correspond to a video image to be displayed, to the light source driving unit 185.

In addition, the processor 170 can control the operation of the scanner 240. Specifically, the processor 170 can control the scanner 240 to sequentially and repeatedly perform first directional scanning and second directional scanning to the outside.

The light source unit 210 includes, for example, a blue light source unit outputting a single blue light, a green light source unit outputting a single green light, and a red light source unit outputting a single red light. Further, the light source unit 210 may include an output light source unit 210IR which outputs infrared output light. In this instance, each light source unit 210 may be a laser diode or an LED. In response to red, green, and blue signals received from the processor 170, the light source driving unit 185 can control the red light source unit, the green light source unit, and the blue light source unit in the light source driving unit 185 to output red light, green light, and blue light respectively.

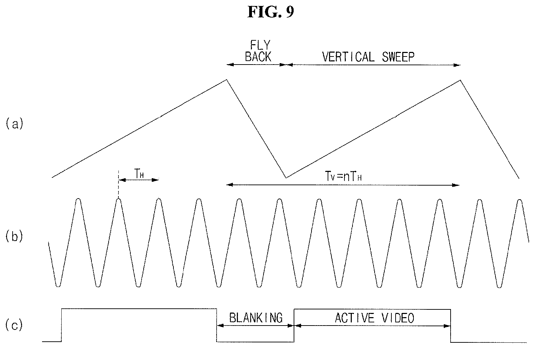

Next, FIG. 9 is a diagram illustrating an example of drive signal waveforms of a scanning projector. Referring to FIG. 9, a scanner sweeps horizontally or vertically according to drive signal waveforms. The scanner performs image scanning, starting from the first pixel position to the last pixel position, and repeats the scanning process.

Referring to FIG. 9, the scanner can be vertically driven by a ramp waveform, for example, by a sawtooth waveform, and can be horizontally driven by a sinusoidal waveform. FIG. 9(a) illustrates a vertical sawtooth waveform having a vertical period TV; FIG. 9(b) illustrates a horizontal sinusoidal waveform having a horizontal period TH; and FIG. 9(c) illustrates an active video period where images are scanned, and a blanking period where images are not displayed.

For example, according to the sawtooth waveform having the vertical period TV, the scanner can sweep linearly in a vertical direction while scanning images. During a vertical sweep period, the scanner sweeps in a vertical direction, for example, from top to bottom; and during a fly-back period, the scanner returns to the first pixel position, and then starts scanning a new image.

Further, according to the sinusoidal waveform having the horizontal period T_{H}, the scanner can sweep in a horizontal direction with a sinusoidal waveform at a sweep frequency of 1/T_{H} while scanning images. During the vertical sweep period, which is an active video period where images are scanned, a light source can be turned on to implement images. Further, during the fly-back period, which is a blanking period where images are not displayed, the light source can be turned off.

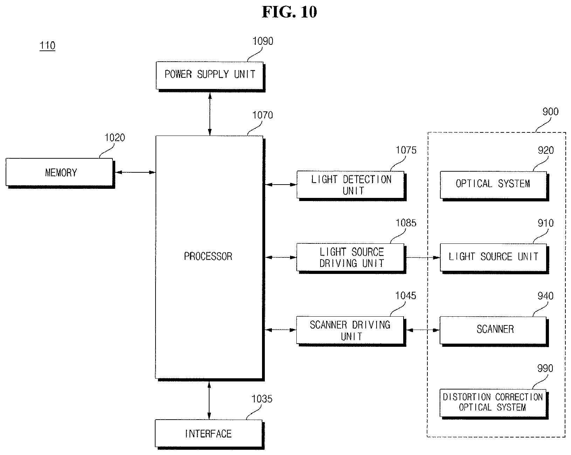

Next, FIG. 10 is an internal block diagram schematically illustrating a scanning projector 110 according to an embodiment of the present invention. Referring to FIG. 10, the scanning projector 110 includes a light source unit 910 including a plurality of colored light sources; an optical system 920 which synthesizes light beams output from the light source unit 910; a scanner 940 which outputs the synthesized light and performs scanning in a horizontal direction and a vertical direction; and a processor 1070 which generates a scanner driving signal to drive the scanner.

The scanner 940 includes a mirror plate, which reflects light output from the light source unit 910, and can be named as a scanning mirror. In FIG. 10, the scanning projector 110 includes an optical engine 900. For example, the optical engine 900 may include the light source unit 910, optical system 920, scanner 940, and the like.

Further, the optical engine 900 may also include a distortion correction optical system 990 which is disposed in front of the scanner 940. Particularly, the distortion correction optical system 990 can correct distortion occurring when the light, output from the scanner 940, is projected onto a screen having a curved surface.

Thus, the optical engine 900 may be composed of a light source unit including a plurality of laser diodes which generate laser light; a collimating lens unit which collimates emitting laser light; a light synthesizer (e.g., filter) which synthesizes generated laser light beams; and a MEMS scanner 940 which projects an image onto a screen. The light source unit 910 may include a plurality of light sources such as a red light source unit, a green light source unit, and a blue light source unit. As discussed above, each light source unit may include a laser diode.

In addition, the light source unit 910 can be driven by an electric signal from the light source driving unit 1085, and the electric signal of the light source driving unit 1085 can be generated by the processor 1070. The light output from the light source unit 910 can then be transferred to the scanner 940 after passing through the optical system 920.

Further, the optical system 920 may include various optical components such as a filter, a mirror, a lens, or the like, in order to implement an image of an object by using reflection or refraction of light. Light output from each light source unit 910 can be collimated through the optical system 920, particularly through each collimating lens in the collimating lens unit.

That is, the scanning projector 110 may further include a collimating lens, which is disposed in front of the light source unit 910 and can convert the light, emitted from the light source unit 910, into planarized light. The collimating lens can also be provided, the number of which may correspond to the number of light sources. In addition, the light synthesizer synthesizes light beams, output from the light source unit 910, and outputs the synthesized light in one direction. Thus, the light synthesizer may include a predetermined number of filters or mirrors.

Each light synthesizer may be composed of one or more optical components, and a set of these optical components can be referred to as the light synthesizer. Further, the light synthesizer, which includes a plurality of mirrors, can also be named as a mirror unit. The optical system 920 may also be a general name for optical components, such as a filter, a mirror, a lens, or the like, which are used to implement an image of an object by reflection or refraction of light.

The interface 1035 can serve as an interface for all the external devices connected to the scanning projector 110 through wired and wireless communication. The interface 1035 can also receive data or power from these external devices, and transmit the received data or power to each element in the scanning projector 110, and enable data in the scanning projector 110 to be transmitted to the external devices.

Further, the scanner 940 can receive light from the light source unit 910, and sequentially and repeatedly perform first directional scanning and second directional scanning to the outside. The scanning operation can also be repeatedly performed over the entirety of the external scan area. Particularly, light output from the scanner 940 can be output to a projection area of a screen.

In addition, the scanner 940 is a device for horizontally and vertically scanning a beam output from the light source unit 910, for example, a laser diode, so that the laser beam is focused onto an image. The scanner 940 can sequentially and repeatedly perform first directional scanning and second directional scanning to the outside.

The scanner 940 can also sequentially and repeatedly perform scanning from left to right, and scanning from right to left of the external scan area. Further, the scanner 940 can perform the scanning over the entirety of the external scan area in units of frames. A projection image based on visible light (RGB) can thus be output to the external scan area by such scanning operation.

By using a 2D scanner, which can sequentially perform first directional scanning and second directional scanning, there is no need for a plurality of scanners, such that the scanning projector 110 can be provided in a compact size, and production costs can be reduced.

As discussed above, the scanner 940 can be a MEMS scanner. In one embodiment of the present invention, even when the screen, on which the projection image is displayed, has a free-form curved surface, the projection image can be displayed corresponding to the curved surface of the screen.

In addition, the processor 1070 can control the overall operation of the scanning projector 110. Specifically, the processor 1070 can control an operation of each unit in the scanning projector 110, and control a video image, received from an external source, to be output to the external scan area as a projection image.

The processor 1070 can also control a video image stored in a memory 1020, or a video image received through the interface 1035 from an external source, to be output to the external area as a projection image. The processor 1070 also controls the operation of the scanner 940. Specifically, the processor 1070 controls the scanner 940 to sequentially and repeatedly perform first directional scanning and second directional scanning to the outside.

In addition, a scanner driving unit 1045, which drives the scanner 940, may be included, and the processor 1070 can control the scanner driving unit 1045 which drives the scanner 940. The scanner driving unit 1045 may also include a sinusoidal wave generation circuit, a triangular wave generation circuit, a signal combination circuit, and the like.

According to a received scanner driving signal, the scanner driving unit 1045 generates a driving frequency for driving the scanner 940, and the scanner 940 is horizontally or vertically driven to scan light onto a screen according to a horizontal and vertical driving frequency, thereby implementing an image on the screen. Further, the scanner driving unit 1045 can drive the horizontal scanning with a sinusoidal waveform, and the vertical scanning with a sawtooth waveform. The scanner driving unit 1045 can also generate a driving signal of the MEMS scanner 940.

In addition, as discussed above, the light source unit 910 can include a blue light source unit outputting a single blue light, a green light source unit outputting a single green light, and a red light source unit outputting a single red light. In this instance, each light source unit may be a laser diode. In response to red, green, and blue signals received from the processor 1070, the light source driving unit 1085 controls the red light source unit, the green light source unit, and the blue light source unit in the light source driving unit 1085 to output red light, green light, and blue light respectively.

The light source driving unit 1085 can also perform current modulation of a laser diode according to video data and by the control of the processor 1070. Also, a power supply unit 1090 receives an external or internal power source by the control of the processor 1070, and supplies the received power source required for the operation of each element.

The scanning projector 110 may further include a light detection unit 1075 which can detect light inside the scanning projector 110. In more detail, the light detection unit 1075 is provided inside the scanning projector 110 to detect light output from the light source unit 910 and/or light output from the scanner 940. For example, the light detection unit 1075 may include a photo diode sensor for converting received light into an electric signal. The photo diode sensor can receive light, generate an electric signal according to the received light, and transmit the generated electric signal to the processor 1070 of the scanning projector.

In addition, the light detection unit 1075 can detect the brightness of the laser diodes, and use the same as data for adjusting brightness, white balance, and the like. The processor 1070 can receive the signal and/or data detected by the light detection unit 1075. Further, based on the signal and/or data detected by the light detection unit 1075, the processor 1070 can determine a current state, and control the scanning projector 110 to perform an operation in response to the determination. Further, the processor 1070 can change a scanning driving signal based on the detection data received from the light detection unit 1075.

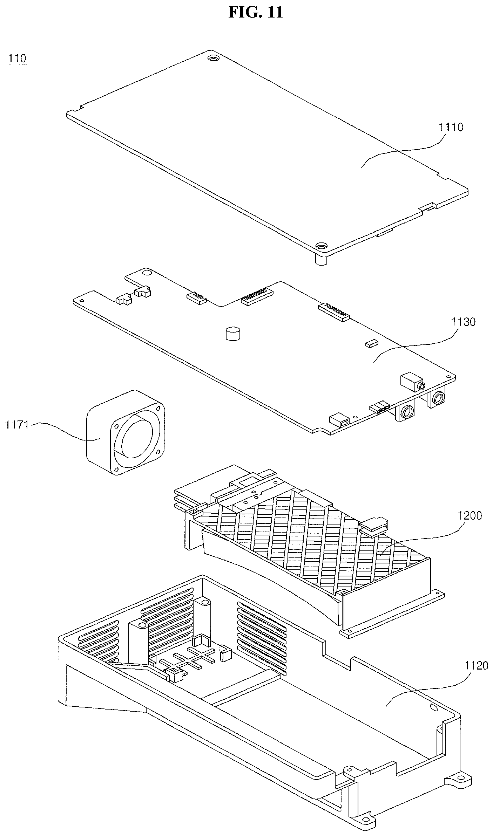

Next, FIG. 11 is an exploded perspective view of a scanning projector according to an embodiment of the present invention. Referring to FIG. 11, the scanning projector 110 includes a lower case 1120 having an accommodation space, and an upper case 1110 which is assembled with the lower case 1120. The lower case 1120 is provided to fix various components in the accommodation space, and the upper case 110 protects the components therein.

A plurality of components, for example, an optical engine module 1200 including optical components, such as a light source for projecting an image, a scanner, and the like, can be disposed in the internal accommodation space between the upper case 1110 and the lower case 1120. The optical engine module 1200 may include a base unit disposed in the accommodation space; a light source unit including a plurality of laser light sources; a scanner which performs scanning of light in a horizontal direction and a vertical direction based on the light output from the light source unit; and the like.

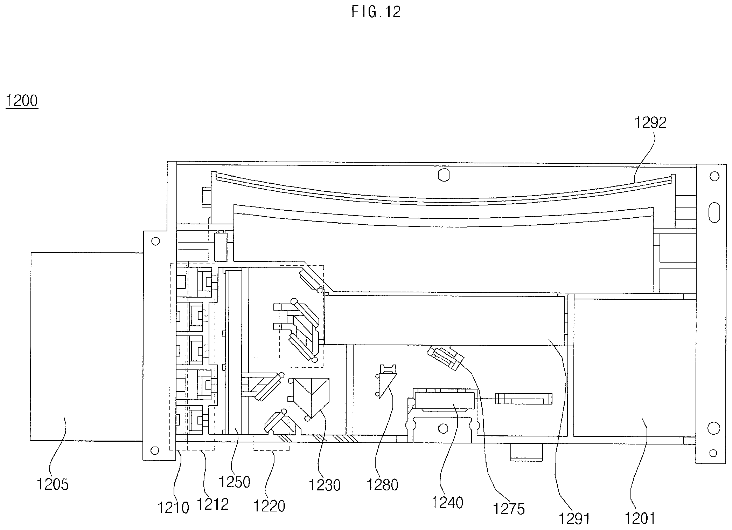

The optical engine module 1200 will be described later in detail with reference to FIGS. 12 to 25. Further, the lower case 1120 can be assembled with the shelf case (130 in FIGS. 1 to 5), and the optical engine module 1200 can be secured to the lower case 1120.

Referring to FIG. 11, the scanning projector 110 may further include a controller which processes a video signal and the like; and a driving board 1130, on which a driving unit driving a laser diode and a scanner is mounted. On the driving board 1130, a video processor (VP) can be mounted which performs image processing and image correction, processes white balance and brightness uniformity, and serves as a timing controller of a scanner driver (SD) and a laser diode driver (LDD).

The scanner driver (SD) and the laser diode driver (LDD) can be mounted on the driving board 1130. The scanner driver (SD) may include a digital driver (SDD) and an analog driver (SDA). The SDD can also process a scanner driving algorithm. The SDA can generate a scanner driving signal and sense a vertical and horizontal motion of a scanner.

In addition, the laser diode driver (LDD) can basically perform current modulation of a laser diode, and may include a processor to reduce speckle. A power management (PM) unit, which manages power, can also be mounted on the driving board 1130.

Among the components included in the scanning projector 110, the optical engine module 1200 is a component having the largest volume and weight, such that the driving board 1130 is desired to be disposed on the optical engine module 1200. That is, the driving board 1130 can be interposed between the upper case 1110 and the optical engine module 1200.

The scanning projector can also use a plurality of laser light sources to improve brightness and the like. However, as the number of light sources is increased, heat generated in the light sources is increased, such that the life of light sources may be reduced, and optical performance may be deteriorated. Accordingly, heat generated in the light sources is advantageously dissipated to help operate the projector and the light sources within a proper range of temperature. A solution to efficiently cooling the heat generated in the light sources is thus provided.

For example, the scanning projector 110 may further include a blower fan 1171 as a cooling unit. The blower fan 1171 generates an air flow at the side of the optical engine module 1200, and thus heat generated in the driving board 1130 and the optical engine module 1200 can be efficiently cooled.

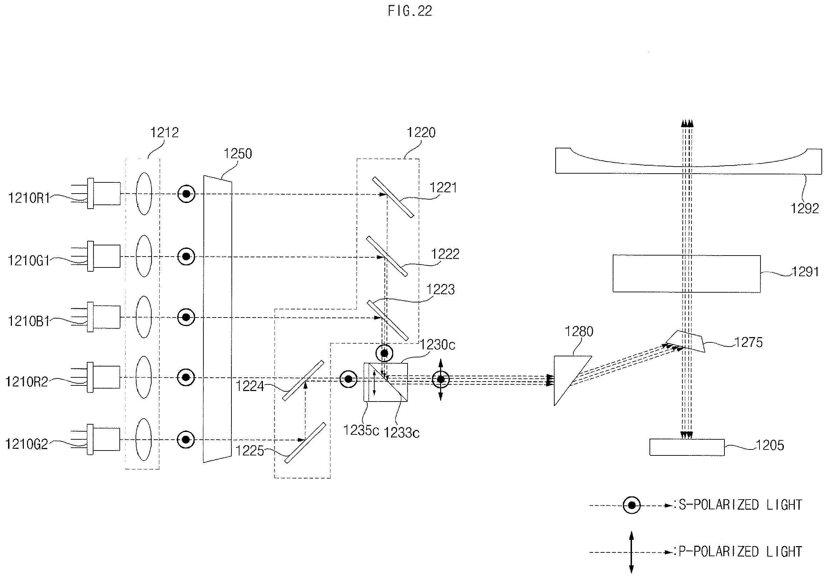

Next, FIGS. 12 to 21 are diagrams illustrating a structure and operation of an optical engine module according to various examples not falling under the scope of protection to better understand the present invention, and FIGS. 22 to 25 are diagrams illustrating a structure and operation of an optical engine module according to various embodiments of the present invention. In particular, FIG. 12 is a top view illustrating optical components assembled to the optical engine module.

Referring to FIG. 12, the optical engine module 1200 included in the scanning projector includes a light source unit 1210 including a plurality of laser light sources; a mirror unit 1220 including a plurality of mirrors which transmit or reflect light output from the light source unit 1210; a light synthesizer 1230 which synthesizes light beams transmitted or reflected by the mirror unit 1220; a MEMS scanner 1240 which reflects incident light and performs scanning of the light in a horizontal direction and a vertical direction; and a light reflection unit 1275 which reflects the light, synthesized by the light synthesizer 1230, to the MEMS scanner 1240.

The light synthesizer 1230 may include at least one Polarization Beam Splitter (PBS) surface and a 1/2 wavelength plate (HWP). The light synthesizer 1230 may further include a Beam Splitter (BS) surface, a first reflection surface, and a second reflection surface. That is, the light synthesizer 1230 may be composed of a Polarization Beam Splitter (PBS) surface and a 1/2 wavelength plate (HWP), or may be composed of a Beam Splitter (BS) surface, a first reflection surface, and a second reflection surface.

In the display system using laser as a light source, optical interference may occur on the screen due to the characteristics of the laser light source, and the speckle phenomenon may arise in which small speckles appear to twinkle. When the laser light (beam) with high coherence scatters on an object having a high surface roughness, namely a rough surface structure, constructive interference and destructive interference may be caused by interaction of wave fronts.

Accordingly, a speckle pattern is formed, with bright speckles formed at a point where constructive interference occurs on the screen, and dark speckles formed at a point where destructive interference occurs. Since such a speckle pattern acts as a noise component in a display system using laser as a light source, techniques have been developed to reduce the speckle pattern.

Various methods of removing the speckle pattern may be used, which include a method of inducing artificial scattering of light by passing the light through patterned glass, or a method of applying artificial vibration to one or some components in the optical system. Further, there is also a method of using polarization diversity of laser.

By using the light synthesizer 1230, the speckle pattern can be reduced by overlapping two speckle patterns which are independent from each other, and are generated by P waves and S waves that are separated from each other by an optical path difference (OPD). The 1/2 wavelength plate can rotate the wavelength of incident light to convert the polarization of the light. Further, the PBS surface of the light synthesizer 1230 can split polarization by transmitting light of a specific polarization, and reflecting light of the other polarization.

Upon splitting P-wave polarized light and S-wave polarized light, the light synthesizer 1230 synthesizes the split light, such that when the synthesized P-wave and S-wave are scattered on the screen to reach a detector or a person's visual cells, two speckle patterns, which are independent from each other, are generated, thereby reducing the speckle contrast.

The optical engine module 1200 may also include a base unit 1201 which is disposed inside the accommodation space of the lower case (1120 in FIG. 11). The base unit 1201 may be made of magnesium/aluminum alloy or plastic material, and serves as a base on which the optical components are assembled.

In addition, the optical components of the optical engine module 1200 may be disposed on the same plate. For example, the optical components of the optical engine module 1200 can be assembled to be disposed on the top surface of the base unit 1201. Accordingly, as the optical components are assembled on only one surface of the base unit 1201, no process is required to invert or rotate the base unit 1201, thereby further improving assembly properties.

The light source unit 1210 may include one or more of a red laser diode, a green laser diode, and a blue laser diode. For example, the light source unit 1210 may include two red laser diodes, two green laser diodes, and two blue laser diodes. Generally, when full white is realized, blue is used least, such that the light source unit 121 can more desirably include two red laser diodes, two green laser diodes, and one blue laser diode.

Further, the plurality of laser diodes provided for the light source unit 1210 can be disposed side by side, in which case laser diodes of the same color or having a wavelength difference of less than 30nm may be disposed so as not to be adjacent to each other. Specifically, the green laser diodes 1210G1 and 1210G2 emit the most heat, such that it is desired not to place the green laser diodes 1210G1 and 1210G2 successively. Each of the laser light sources of the light source unit 1210 can also be fixed to the base unit 1201. For example, each of the laser light sources of the light source unit 1210 can be mounted or inserted at an opening formed on one surface of the base unit 1201.

In addition, the optical engine module 1200 may further include a plurality of collimating lenses 1212 disposed in front of the plurality of laser light sources of the light source unit 1210. Each of the collimating lenses 1212 are held by a lens holder to be arranged at one side of each light source. The light reflection unit 1275 can also reflect all incident light to the MEMS scanner 1240. Thus, the light reflection unit 1275 may be a total mirror which performs total reflection of light.

The mirror unit 1220 includes a plurality of mirrors, at least some of which are total mirrors, and the remaining mirrors are dichroic mirrors. The total mirror can perform total reflection of light, and the dichroic mirror can split or synthesize light beams based on wavelengths of incident lights. The surfaces of the dichroic mirrors may also be treated with a coating capable of transmitting or reflecting light differently based on the wavelengths thereof and treated with an anti-reflection (AR) coating in order to minimize reflectivity.

More preferably, two mirrors, which are disposed at the outermost side of the mirror unit 1220 among the plurality of mirrors, can be total mirrors; and the remaining mirrors, which are interposed between the two total mirrors, can be dichroic mirrors. The optical engine module 1200 may further include a prism element 1280 which changes an optical path of light, output from the light synthesizer 1230, to the light reflection unit 1275.

In more detail, the prism element 1280 can adjust some of the light from the laser diodes in order to increase brightness efficiency, thereby allowing light to be incident as much as possible onto the surface of the scanner 1240. For example, the prism element 1280 can adjust the light, which is incident in the shape of an oval, into the shape of a circle. Further, the prism element 1280 can change an optical path.

In the example including the prism element 1280, the prism element 1280 can be disposed upstream of the optical path with respect to the light reflection unit 1275. Also, the prism element 1280 can be disposed downstream of the optical path with respect to the light synthesizer 1230. In this instance, light can move sequentially through the light synthesizer 1230, the prism element 1280, and then the light reflection unit 1275.

The optical engine module 1200 may further include distortion correction optical systems 1291 and 1292, which are disposed in front of the scanner 1240. In more detail, the distortion correction optical systems 1291 and 1292 may be lenses for correcting chromatic aberration and a distorted image, which are caused by the prism element 1280.

The distortion correction optical systems 1291 and 1292 may correspond to a prism 1291 which is disposed in front of the scanner 1240 at a position spaced apart from the scanner 1240 by a predetermined distance; and a diverging lens unit 1292 which is disposed in front of the prism 1291 at a position spaced apart from the prism 1291 by a predetermined distance. The diverging lens unit 1292 may include a diverging lens with a concave lens formed at least one surface thereof; and a chromatic aberration correction lens with an aspheric lens formed at least one surface thereof.

Alternatively, the diverging lens unit 1292 may be formed as an aspheric lens. In this instance, the front surface of the aspheric lens may be formed to have a higher degree of asphericity than the rear surface thereof. The optical engine module 1200 may further include a light detection unit which detects light in the scanning projector 110.

For example, the light detection unit may be a photo diode. The light detection unit can detect the brightness of the laser diodes, and use the same as data for adjusting brightness and white balance. Further, the optical engine module 1200 may further include a filter unit 1250, which transfers some of the light, output from the light source unit 1200, to the light detection unit.

For example, the filter unit 1250 may include a plurality of filters corresponding to the plurality of light sources of the light source unit 1200. The filter unit 1250 can transfer some of the light from the light source unit 1210, for example, 1 to 4 percent of the light, to the photo diode (PD) sensor of the light detection unit, and transmit the remainder therethrough.

The filter unit 1250 is also disposed in front of the light source unit 1210 in order to obtain light to thus sense the light output from the light source unit 1210. Further, the filter unit 1250 can be interposed between the collimating lenses 1212 and the mirror unit 1220.

The scanning projector 110 may further include a heat sink 1205 which comes into contact with the rear surface of the plurality of laser light sources of the light source unit 1210. In addition, the heat sink 1205 may be made of metals having high thermal conductivity. For example, the heat sink 1205 may be made of aluminum, magnesium, copper, and the like. The heat sink 1205 may also include a base, and a plurality of radiation fins which protrude from the base. In particular, the radiation fin is a portion which increases the radiation area of the heat sink 1205 to further radiate heat, transferred from the base, by contact with air.

The heat sink 1205 can come into contact with a laser light source to transfer heat of the laser diode to the outside. Accordingly, heat generated by a plurality of laser diodes can be transferred to the heat sink 1205 to be radiated and cooled. As described above with reference to FIG. 11, a lower fan 1171 may be further included as a cooling unit. In particular, the blower fan 1171 can generate an air flow at the side of the heat sink 1205. Thus, heat generated in the optical engine module 1200 can be efficiently cooled.

Light, output from a semiconductor laser light source, may have an S-polarization or a P-polarization. Operations of components in the optical engine module 1200 will be described below in detail based on the polarization of light which is output from the laser source.

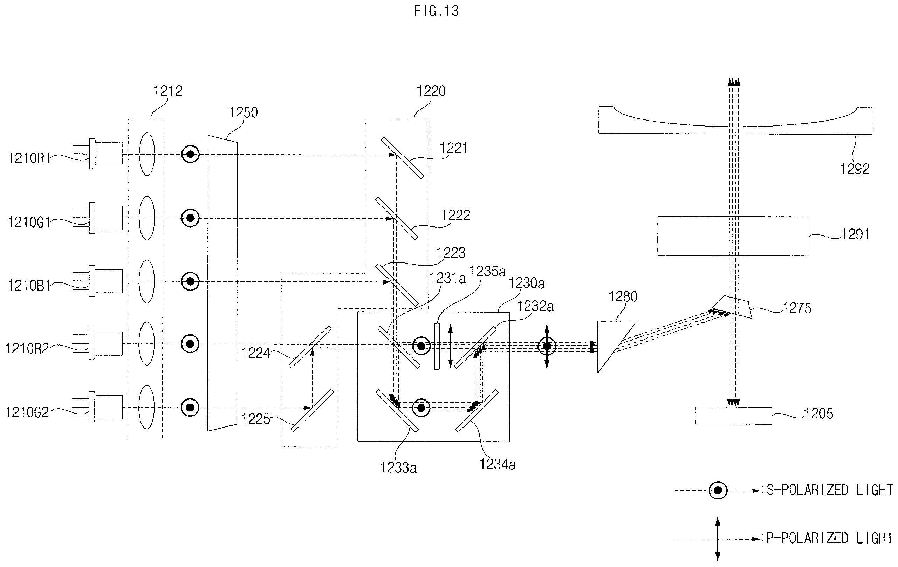

FIG. 13 is a diagram schematically illustrating optical components, included in the optical engine module 1200 illustrated in FIG. 12, along with an optical path. In particular, FIG. 13 also illustrates the laser light sources 1210R1, 1210G1, 1210B1, 1210R2, and 1210G2 outputting S-polarized light.

The light source unit 1210 may include one or more of a red laser diode, a green laser diode, and a blue laser diode. For example, as illustrated in FIG. 13, the light source unit 1210 may include two red laser diodes 1210R1 and 1210R2, two green laser diodes 1210G1 and 1210G2, and one blue laser diode 1210B1.

It is preferable that the two green laser diodes 1210G1 and 1210G2 are not disposed successively since the green laser diodes 1210G1 and 1210G2 emit the most heat. For example, as illustrated in FIG. 13, the laser diodes can be arranged in the order of the first red laser diode 1210R1, the first green laser diode 1210G1, the blue laser diode 1210B1, the second red laser diode 1210R2, and the second green laser diode 1210G2.

The collimating lens 1212 is assembled with a separate holder, and its optical axis is aligned so as to be disposed in front of the laser light sources 1210R1, 1210G1, 1210B1, 1210R2, and 1210G2. Light, output from the laser light sources 1210R1, 1210G1, 1210B1, 1210R2, and 1210G2, is collimated by the collimating lens 1212 into a parallel light beam. Some of the lights output from the laser light sources 1210R1, 1210G1, 1210B1, 1210R2, and 1210G2 can be transferred to the light detection unit 1075 (FIG. 10).

In addition, the mirror unit 1220 may include a plurality of mirrors 1221, 1222, 1223, 1224, and 1225, which transmit or reflect light. The plurality of mirrors 1221, 1222, 1223, 1224, and 1225 can be disposed corresponding to the laser light sources 1210R1, 1210G1, 1210B1, 1210R2, and 1210G2, respectively. Preferably, two mirrors 1221 and 1225, which are disposed at the outermost side among the plurality of mirrors 1221, 1222, 1223, 1224, and 1225, are total mirrors; and the remaining mirrors 1222, 1223, and 1224, which are interposed between the two total mirrors 1221 and 1225, are dichroic mirrors that transmit or reflect light based on wavelengths thereof.

Further, the dichroic mirrors 1222, 1223, and 1224 can transmit or reflect light of different wavelengths. For example, the dichroic mirror 1222, which is disposed corresponding to the first green laser diode 1210G1, reflects green light and transmits red light. Accordingly, the dichroic mirror 1222 reflects the light output from the first green laser diode 1210G1, and transmits the red light reflected from the total mirror 1221.

In addition, the dichroic mirror 1223, which is disposed corresponding to the blue laser diode 1210B1, reflects blue light and transmits green light and red light. Accordingly, the dichroic mirror 1223 reflects the blue light output from the blue laser diode 1210B1, and transmits the red light reflected from the total mirror 1221, and the green light reflected from the dichroic mirror 1222.

Further, the dichroic mirror 1224, which is disposed corresponding to the second red laser diode 1210R2, reflects green light and transmits red light. Accordingly, the dichroic mirror 1224 transmits the light output from the second red laser diode 1210R2, and reflects the green light reflected from the total mirror 1221. S-polarized light, output from the laser light sources 1210R1, 1210G1, 1210B1, 1210R2, and 1210G2, can thus be transmitted or reflected by the plurality of mirrors 1221, 1222, 1223, 1224, and 1225, to be incident on a light synthesizer 1230a.

The light synthesizer 1230a includes a PBS surface 1232a, a 1/2 wavelength plate (HWP) 1235a, a BS surface 1231a, a first reflection surface 1233a, and a second reflection surface 1234a. The arrangement position of the 1/2 wavelength plate 1235a can vary depending on an arrangement direction of the light synthesizer 1230a and the polarization of light beams output from the laser light sources 1210R1, 1210G1, 1210B1, 1210R2, and 1210G2.

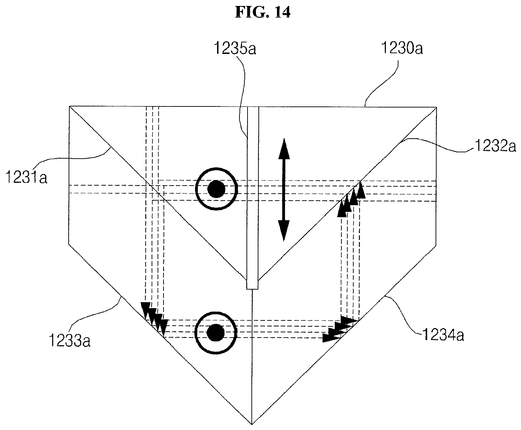

Referring to FIGS. 13 and 14, when a direction where the first reflection surface 1233a and the second reflection surface 1234a are disposed is defined as a rear side of the light synthesizer 1230a, and a direction opposite to the rear side is defined as a front side, the front side of the light synthesizer 1230a can be disposed toward the plurality of mirrors 1221, 1222, and 1223; and the second red laser diode 1210R2, the second green laser diode 1210G2, and the mirrors 1224 and 1225 disposed corresponding thereto can be disposed at the lateral side of the light synthesizer 1230a.

In addition, the 1/2 wavelength plate 1235a is interposed between the BS surface 1231a and the PBS surface 1232a. Further, the BS surface 1231a and the PBS surface 1232a are arranged so as to be inclined at 45 degrees with respect to the optical path. The BS surface 1231a reflects and transmits the incident light to split the light 50:50. The PBS surface 1232a splits polarization by transmitting light of a specific polarization and reflecting light of other polarization. For example, the PBS surface 1232a can reflect S-polarized light and transmit P-polarized light.

Further, the first reflection surface 1233a and the second reflection surface 1234a reflect the incident light. Thus, the first reflection surface 1233a and the second reflection surface 1234a may include a mirror surface which is coated with a metal material. More preferably, the first reflection surface 1233a and the second reflection surface 1234a may be composed of two glass surfaces which are inclined at a predetermined angle, so that total reflection of the glass surfaces can be used without separate coating.

In addition, the 1/2 wavelength plate 1235a rotates the wavelength of incident light to convert the polarization of the light. Referring to FIG. 13, the 1/2 wavelength plate 1235a converts S-polarized light into P-polarized light.

Further, the BS surface 1231a splits light, which is transmitted or reflected by the mirror unit 1220, into the 1/2 wavelength plate 1235a and the first reflection surface 1233a; the 1/2 wavelength plate 1235a converts polarization of the light split by the BS surface 1231a; the first reflection surface 1233a reflects the light, split by the BS surface 1231a, to the second reflection surface 1234a; the second reflection surface 1234a reflects the light, reflected from the first reflection surface 1233a, to the PBS surface 1232a; and the PBS surface 1232a synthesizes light, which is polarization-converted by the 1/2 wavelength plate 1235a, and light which is reflected from the second reflection surface 1234a, and outputs the synthesized light. The light synthesizer 1230a, which is configured as illustrated in FIG. 13, thus reduces speckle by synthesizing P-polarized light and S-polarized light.

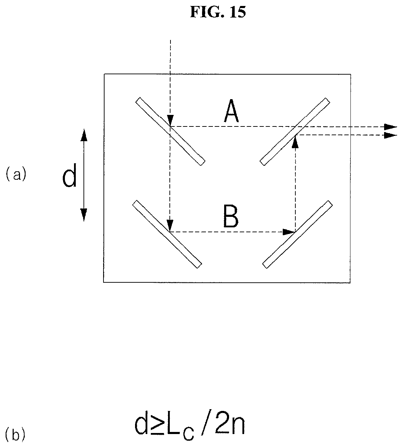

FIG. 15 is a diagram illustrating a design condition of the light synthesizer to reduce speckle. Referring to FIG. 15(a) and (b), light A and light B denote polarized light beams in different states; d denotes a distance between the light A and the light B; n denotes a refractive index of materials used to manufacture optical components in the light synthesizer; and Lc denotes a coherence length of a laser diode light source.

In this instance, the light synthesizer can be manufactured so that all the factors of d, Lc, and n satisfy an equation shown in FIG. 15(b). Assuming that the light synthesizer has a structure in which the BS surface and the PBS surface are disposed in front of the light synthesizer, and the first reflection surface and the second reflection surface are included, the 1/2 wavelength plate can be interposed between the BS surface and the PBS surface, or between the first reflection surface and the second reflection surface.

Referring to FIGS. 13 and 14, the PBS surface 1232a and the BS surface 1231a can be disposed in front of the light synthesizer, and the first reflection surface 1233a and the second reflection surface 1234a can be disposed at the rear side of the light synthesizer. Further, the 1/2 wavelength plate 1235a can be interposed between the BS surface 1231a and the PBS surface 1232a.

The BS surface 1231a splits the incident light to form two optical paths. Light (light A), having passed through the 1/2 wavelength plate 1235a, and light (light B), having moved through the first reflection surface and the second reflection surface to be incident on the PBS surface 1232a, have different polarizations. The light A and the light B, which are two different polarized light beams, are synthesized on the PBS surface 1232a. Thus, P-polarized light and S-polarized light are synthesized after passing through the light synthesizer 1230a.

As described above, by synthesizing lights, which have polarization modes changed into different polarization states, interference characteristics of light can be reduced, thus obtaining an advantage of reducing speckle.

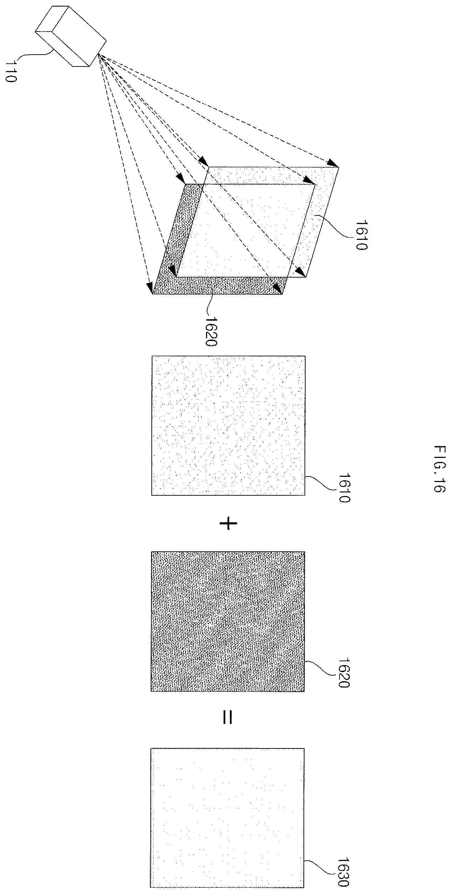

Next, FIG. 16 is a diagram illustrating a speckle phenomenon and a method of reducing speckle by using polarization. Referring to FIG. 16, light output from the scanning projector 110 using a laser light source is scattered on the screen and reflected therefrom, which is thus recognized by a user.

According to an example, when Δ P-wave + S-wave, which are temporally separated by ΔOPD, are scattered on the screen to reach a detector or a person's visual cells, two speckle patterns 1610 and 1620, which are independent from each other, are generated, thereby reducing the speckle contrast.

A beam from the laser light source has polarization components, and when the phase difference between two waves is n, speckle patterns, which are generated on the surface of a detector or on a person's visual cells, are independent from each other. When an "n" number of speckle patterns, which are independent from each other, overlap, speckle contrast is reduced to 1/Vn.

According to an example, the number of speckle patterns, which are independent from each other, is 2, such that a reduction rate is 1/√2 = 0.707. That is, by using the light synthesizer, speckle can be reduced by about 29% as compared with an initial value.

Referring to FIG. 13, the light output from the light synthesizer 1230a is incident on the prism element 1280. The prism element 1280 adjusts some of the light from the laser diodes in order to increase the brightness efficiency, thereby allowing light to be incident as much as possible onto the surface of the scanner 1240. For example, the prism element 1280 can adjust the light, which is incident in the shape of an oval, into the shape of a circle. Further, the prism element 1280 can change an optical path.

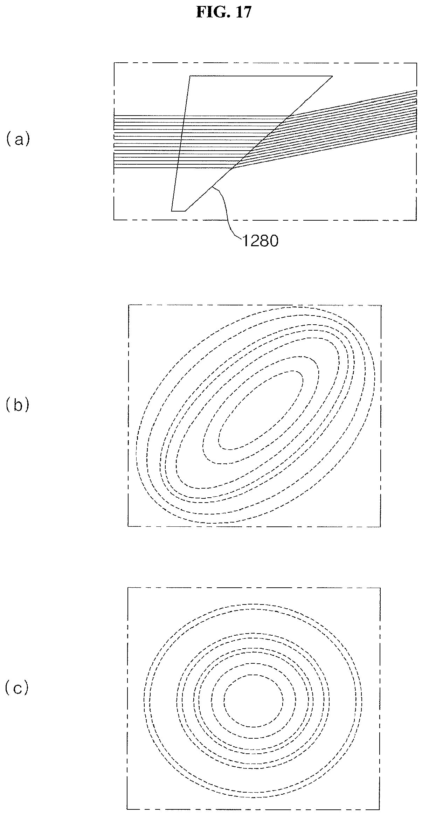

FIG. 17 is a diagram illustrating beam shaping by using the prism element 1280. Referring to FIG. 17(a), the prism element 1280 has an inclined surface with the front portion being different from the rear portion, and refracts the optical path. In addition, an asymmetric beam shape illustrated in FIG. 17(b) can be formed to be in a symmetric beam shape as illustrated in FIG. 17(c).

The asymmetric beam shape may lead to reduction in light efficiency and image quality, such that the optical engine module 1200 may further include the prism element 1280 for beam shaping. In the example including the prism element 1280, the prism element 1280 can be disposed upstream of the optical path with respect to the light reflection unit 1275. Also, the prism element 1280 can be disposed downstream of the optical path with respect to the light synthesizer 1230. In this instance, light can move sequentially through the light synthesizer 1230, the prism element 1280, and then the light reflection unit 1275.

Referring to FIG. 13, the light, reflected from the light reflection unit 1275, is incident on the MEMS scanner 1240, and the MEMS scanner 1240 is driven vertically and horizontally to transmit light to the outside of the scanning projector 100. Referring to FIG. 13, the optical engine module 1200 may further include distortion correction lenses 1291 and 1292, which are disposed in front of the scanner 1240.

Further, the distortion correction lenses 1291 and 1292 are lenses for correcting chromatic aberration and a distorted image, which are caused by the prism element 1280 and the like. The distortion correction optical systems 1291 and 1292 may correspond to a prism 1291 which is disposed in front of the scanner 1240 at a position spaced apart from the scanner 1240 by a predetermined distance; and a diverging lens unit 1292 which is disposed in front of the prism 1291 at a position spaced apart from the prism 1291 by a predetermined distance.

The diverging lens unit 1292 may include a diverging lens with a concave lens formed at least one surface thereof; and a chromatic aberration correction lens with an aspheric lens formed at least one surface thereof. Alternatively, the diverging lens unit 1292 may be formed as an aspheric lens. In this instance, the front surface of the aspheric lens may be formed to have a higher degree of asphericity than the rear surface thereof.

The distortion correction optical systems 1291 and 1292 have not only a distortion correction function, but also an image quality correction function to maintain uniform resolution of the entire screen. The distortion correction optical systems 1291 and 1292 may design and configure optical components while separating the distortion correction function and the image quality correction function. That is, the distortion correction optical systems 1291 and 1292 may include the prism 1291, which performs the distortion correction function, and the diverging lens unit 1292 which performs the image quality correction function.

Accordingly, by changing a physical position of the prism 1291 which is an optical component performing distortion correction, a distortion amount (correction amount) can be adjusted, and the distortion amount, which is changed according to a screen shape, can also be adjusted by the adjusting function.

In a rear projection shelf display, image distortion resulting from a design change of a screen can be corrected without changing components, and the burden of circuit distortion correction can be reduced by optical distortion correction, such that the overall costs are reduced.

In addition, the diverging lens unit 1292 may have a refractive index which is different from that of the prism 1291. The diverging lens unit 1292 can also widen an incidence angle of light having passed through the prism 1291. The diverging lens unit 1292 may include a diverging lens with a concave lens formed at least one surface thereof; and a chromatic aberration correction lens with an aspheric lens formed at least one surface thereof. The diverging lens may have a concave lens formed at least one surface thereof, and may be a plano-concave lens, a bi-concave lens, a diverging meniscus lens, and the like.

For example, the diverging lens may be a plastic concave singlet lens. The plastic lens, which may be easily made by injection molding, is suitable for mass production. More preferably, the diverging lens may also be an aspheric lens. The diverging lens unit 1292 can expand the light having passed through the prism. Particularly, the diverging lens is an optical component that adjusts a screen size, and is disposed in front of the prism 1291 to expand light having passed through the prism.

Further, the chromatic aberration correction lens can correct chromatic aberration and adjust resolution, and may have an aspheric lens formed on at least one surface thereof. The chromatic aberration correction lens may also be a plastic concave singlet lens. Alternatively, the diverging lens unit 1292 may be formed as an aspheric lens. By forming the diverging lens unit 1292 as an aspheric lens, production costs may be further reduced.

In this instance, both the front surface and the rear surface of the aspheric lens may be formed to be aspheric, and the front surface of the aspheric lens may be formed to have a higher degree of asphericity than the rear surface thereof. Accordingly, the front surface and the rear surface of the aspheric lens may perform both a function of the chromatic aberration correction lens and a function of a diverging lens.

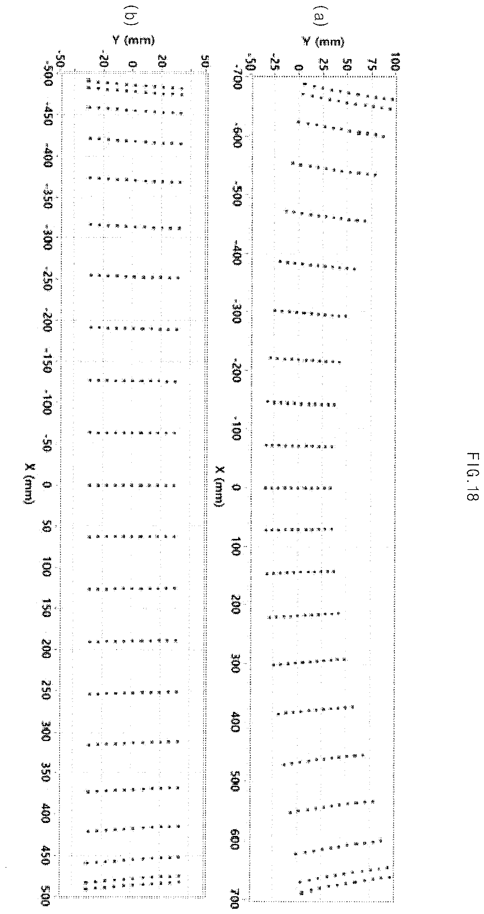

Next, FIG. 18 is a diagram illustrating results of simulation of screen distortion, which are obtained by (a) not applying and (b) applying the distortion correction optical system of the present invention to the shape of a screen having a plane surface and a curved surface as illustrated in FIG. 6. Referring to FIG. 18(b), there is slight distortion at the left and right outer boundaries of a screen. However, these are edge portions of the screen, and thus it can be seen that distortion has been removed from the entire screen.

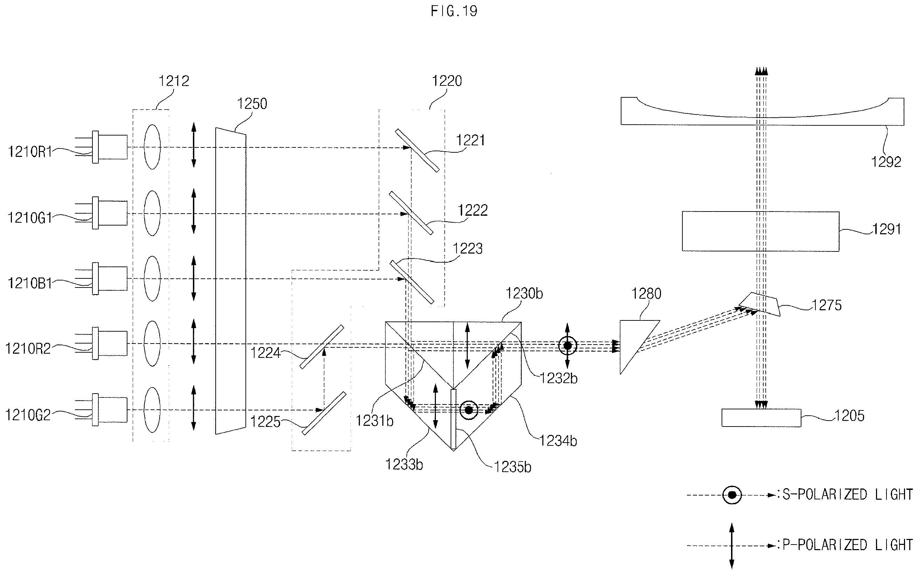

FIG. 19 is a diagram illustrating the optical engine module 1200 according to another example not falling under the scope of protection to better understand the present invention, and description thereof will be made below based on differences between the example of FIG. 19 and the examples and embodiments described above with reference to FIGS. 3 to 18. FIG. 19 illustrates the laser light sources 1210R1, 1210G1, 1210B1, 1210R2, and 1210G2 of the light source unit 1210 outputting P-polarized light.

Referring to FIG. 19, the light synthesizer 1230b includes a PBS surface 1232b, a 1/2 wavelength plate 1235b, a BS surface 1231b, a first reflection surface 1233b, and a second reflection surface 1234b. The arrangement position of the 1/2 wavelength plate 1235b may vary depending on an arrangement direction of the light synthesizer 1230b and the polarization of light beams output from the laser light sources 1210R1, 1210G1, 1210B1, 1210R2, and 1210G2.

Referring to FIG. 19, the front side of the light synthesizer 1230b is disposed toward the plurality of mirrors 1221, 1222, and 1223; and the second red laser diode 1210R2, the second green laser diode 1210G2, and the mirrors 1224 and 1225 disposed corresponding thereto are disposed at the lateral side of the light synthesizer 1230b. In addition, the 1/2 wavelength plate 1235b is interposed between the first reflection surface 1233b and the second reflection surface 1234b. Further, the BS surface 1231b and the PBS surface 1232b are arranged so as to be inclined at 45 degrees with respect to the optical path.

Referring to FIG. 19, the BS surface 1231b splits light, which is transmitted or reflected by the mirror unit 1220, into the PBS surface 1232b and the first reflection surface 1233b; the first reflection surface 1233b reflects the light, split by the BS surface 1231b, to the 1/2 wavelength plate 1235b; the 1/2 wavelength plate 1235b converts polarization of the light reflected from the first reflection surface 1233b; the second reflection surface 1234b reflects the light, which is polarization-converted by the 1/2 wavelength plate 1235b, to the PBS surface 1232b; and the PBS surface 1232b synthesizes light, which are split by the BS surface 1231b, and light which is reflected from the second reflection surface 1234b, and outputs the synthesized light.

In this instance, the light, which is split by the BS surface 1231b and is reflected to the PBS surface 1232b, remains to be P-polarized light; and the light, which is split by the BS surface 1231b and is reflected to the first reflection surface 1233b, is converted into S-polarized light after passing through the 1/2 wavelength plate 1235b. Thus, speckle can be reduced, as the light synthesizer 1230b synthesizes S-polarized light and P-polarized light, and outputs the synthesized light.

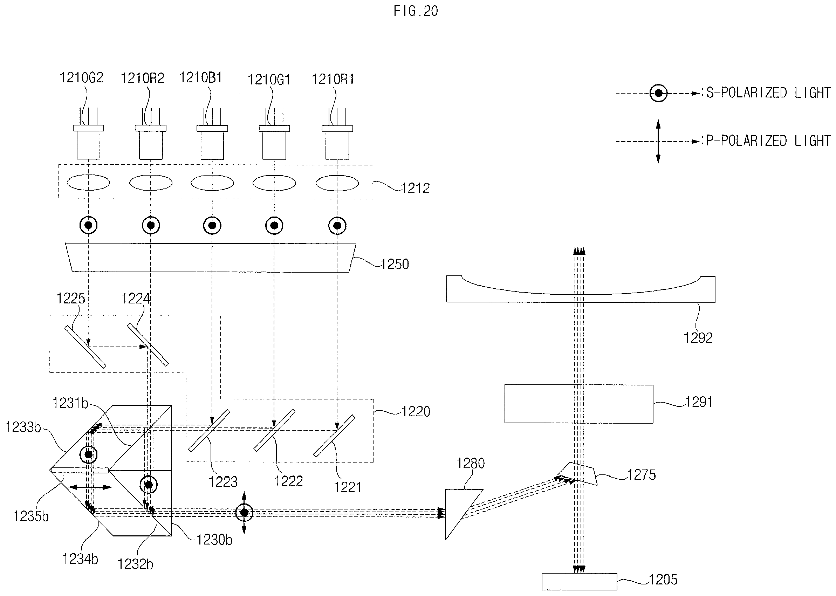

FIG. 20 is a diagram illustrating the optical engine module 1200 according to another example not falling under the scope of protection, and description thereof will be made below based on differences from the above-described examples and embodiments. FIG. 20 illustrates the assembly position of the laser light sources 1210R1, 1210G1, 1210B1, 1210R2, and 1210G2 of the light source unit 1210 in the optical engine module 1200 being changed by rotating by 90 degrees, and S-polarized light is output.

Referring to FIG. 20, the light synthesizer 1230b includes a PBS surface 1232b, a 1/2 wavelength plate 1235b, a BS surface 1231b, a first reflection surface 1233b, and a second reflection surface 1234b. The arrangement position of the 1/2 wavelength plate 1235b may vary depending on an arrangement direction of the light synthesizer 1230b and the polarization of light beams output from the laser light sources 1210R1, 1210G1, 1210B1, 1210R2, and 1210G2.

Referring to FIG. 20, the front side of the light synthesizer 1230b are disposed toward the plurality of mirrors 1221, 1222, and 1223; and the second red laser diode 1210R2, the second green laser diode 1210G2, and the mirrors 1224 and 1225 disposed corresponding thereto are disposed at the lateral side of the light synthesizer 1230b. However, by comparing the example of FIG. 20 with the example of FIG. 19, it can be seen that the assembly position of the laser light sources 1210R1, 1210G1, 1210B1, 1210R2, and 1210G2 is rotated by 90 degrees, such that the light synthesizer 1230b also rotates by 90 degrees to be assembled therewith.

Here, the 1/2 wavelength plate 1235b is interposed between the first reflection surface 1233b and the second reflection surface 1234b. Further, the BS surface 1231b and the PBS surface 1232b are arranged so as to be inclined at 45 degrees with respect to the optical path.

Referring to FIG. 20, the BS surface 1231b splits light, which is transmitted or reflected by the mirror unit 1220, into the PBS surface 1232b and the first reflection surface 1233b; the first reflection surface 1233b reflects the light, split by the BS surface 1231b, to the 1/2 wavelength plate 1235b; the 1/2 wavelength plate 1235b converts polarization of the light reflected from the first reflection surface 1233b; the second reflection surface 1234b reflects the light, which is polarization-converted by the 1/2 wavelength plate 1235b, to the PBS surface 1232b; and the PBS surface 1232b synthesizes light, which is split by the BS surface 1231b, and light which is reflected from the second reflection surface 1234b, and outputs the synthesized light.

In this instance, the light, which is split by the BS surface 1231b and is reflected to the PBS surface 1232b, remains to be S-polarized light; and the light, which is split by the BS surface 1231b and is reflected to the first reflection surface 1233b, is converted into P-polarized light after passing through the 1/2 wavelength plate 1235b. Thus, speckle can be reduced, as the light synthesizer 1230b synthesizes S-polarized light and P-polarized light, and outputs the synthesized light.

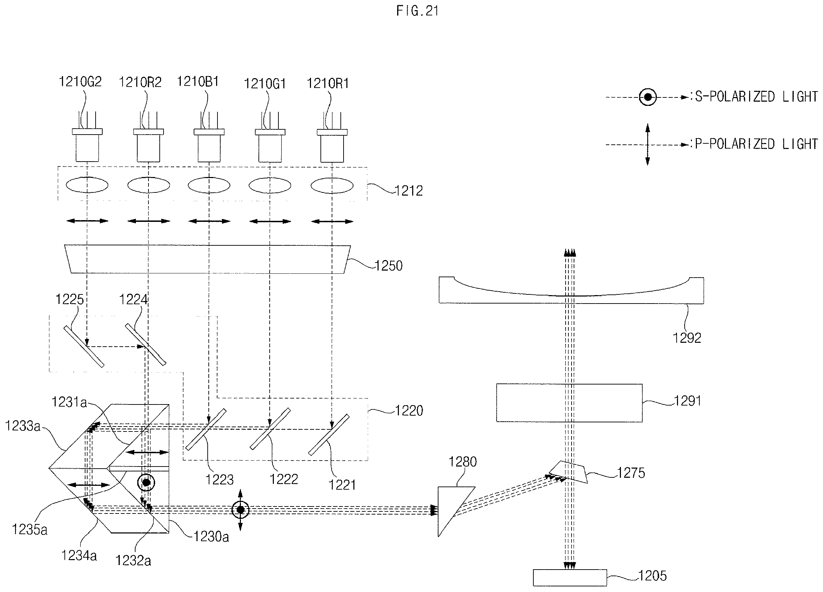

FIG. 21 is a diagram illustrating the optical engine module 1200 according to another example not falling under the scope of protection to better understand the present invention, and description thereof will be made below based on differences from the above-described examples and embodiments. FIG. 21 illustrates the assembly position of the laser light sources 1210R1, 1210G1, 1210B1, 1210R2, and 1210G2 of the light source unit 1210 in the optical engine module 1200 being changed by rotating by 90 degrees, and P-polarized light is output.

Referring to FIG. 21, the front side of the light synthesizer 1230a are disposed toward the plurality of mirrors 1221, 1222, and 1223; and the second red laser diode 1210R2, the second green laser diode 1210G2, and the mirrors 1224 and 1225 disposed corresponding thereto are disposed at the lateral side of the light synthesizer 1230a.Here, the 1/2 wavelength plate 1235a are interposed between the BS surface 1231a and the PBS surface 1232a.

Further, the BS surface 1231a and the PBS surface 1232a are arranged so as to be inclined at 45 degrees with respect to the optical path. However, by comparing the example of FIG. 21 with the examples of FIGS. 13 and 14, it can be seen that the assembly position of the laser light sources 1210R1, 1210G1, 1210B1, 1210R2, and 1210G2 is rotated by 90 degrees, such that the light synthesizer 1230a also rotates by 90 degrees to be assembled therewith.

Referring to FIG. 21, the BS surface 1231a splits light, which is transmitted or reflected by the mirror unit 1220, into the 1/2 wavelength plate 1235a and the first reflection surface 1233a; the 1/2 wavelength plate 1235a converts polarization of the light split by the BS surface 1231a; the first reflection surface 1233a reflects the light, split by the BS surface 1231a, to the second reflection surface 1234a; the second reflection surface 1234a reflects the light, reflected from the first reflection surface 1233a, to the PBS surface 1232a; and the PBS surface 1232a synthesizes light, which is polarization-converted by the 1/2 wavelength plate 1235a, and light which is reflected from the second reflection surface 1234a, and outputs the synthesized light.

In this instance, the light, which is split by the BS surface 1231a and is reflected to the PBS surface 1232a, remains to be P-polarized light; and the light, which is split by the BS surface 1231a and is reflected to the PBS surface 1232a, is converted into S-polarized light after passing through the 1/2 wavelength plate 1235a. Thus, speckle can be reduced, as the light synthesizer 1230a synthesizes S-polarized light and P-polarized light, and outputs the synthesized light.

Next, FIG. 22 is a diagram illustrating the optical engine module 1200 according to an embodiment of the present invention, and description thereof will be made below based on differences from the above-described embodiments. In particular, FIG. 22 illustrates the laser light sources 1210R1, 1210G1, 1210B1, 1210R2, and 1210G2 of the light source unit 1210 outputting S-polarized light.

Referring to FIG. 22, the light synthesizer 1230c according to the embodiment of the present invention includes a PBS surface 1232c and a 1/2 wavelength plate 1235c. The position of the 1/2 wavelength plate 1235c may vary depending on an arrangement direction of the light synthesizer 1230c and the polarization of light beams output from the laser light sources 1210R1, 1210G1, 1210B1, 1210R2, and 1210G2.
Referring to FIG. 22, when a direction, in which the 1/2 wavelength plate 1235c of the light synthesizer 1230c is positioned, is defined as a front side of the light synthesizer 1230c, and a direction opposite to the front side is defined as a rear side, the front side of the light synthesizer 1230c may be disposed toward the second
red laser diode 1210R2, the second green laser diode 1210G2, and the mirrors 1224 and 1225 disposed corresponding thereto; and the plurality of mirrors 1221, 1222, and 1223 are disposed at the lateral side of the light synthesizer 1230c.

Further, the 1/2 wavelength plate 1235c and the PBS surface 1232c are arranged so as to be inclined at 45 degrees. The light source unit 1210 may include one or more of a red laser diode, a green laser diode, and a blue laser diode.

In this instance, when light corresponding to the first red laser diode, the first green laser diode, and the first blue laser diode is incident on the 1/2 wavelength plate 1235c, light corresponding to the remaining laser diodes is incident on the PBS surface 1232c. By contrast, when light corresponding to the first red laser diode, the first green laser diode, and the first blue laser diode is incident on the PBS surface 1232c, light corresponding to the remaining laser diodes is incident on the 1/2 wavelength plate 1235c. The PBS surface 1232c synthesizes light, the wavelength of which is changed by the 1/2 wavelength plate 1235c, and light incident from the mirror unit 1220, and outputs the synthesized light.

Referring to FIG. 22, the light source unit 1210 includes the first red laser diode 1210R1, the first green laser diode 1210G1, the first blue laser diode 1210B1, the second red laser diode 1210R2, and the second green laser diode 1210G2. Referring to FIG. 22, S-polarized light, output from the first red laser diode 1210R1, the first green laser diode 1210G1, and the first blue laser diode 1210B1, pass through the mirrors 1221, 1222, and 1223 corresponding thereto, to be incident on the PBS surface 1232c of the light synthesizer 1230c.

Further, referring to FIG. 22, S-polarized light, output from the second red laser diode 1210R2 and the second green laser diode 1210G2, pass through the corresponding mirrors 1224 and 1225, to be incident on the 1/2 wavelength plate 1235c of the light synthesizer 1230c. In this instance, S-polarized light incident on the 1/2 wavelength plate 1235c is converted into P-polarized light, which is synthesized with S-polarized light output from the first red laser diode 1210R1, the first green laser diode 1210G1, and the first blue laser diode 1210B1 on the PBS surface 1232c. Thus, speckle can be reduced, as the light synthesizer 1230c synthesizes S-polarized light and P-polarized light, and outputs the synthesized light.

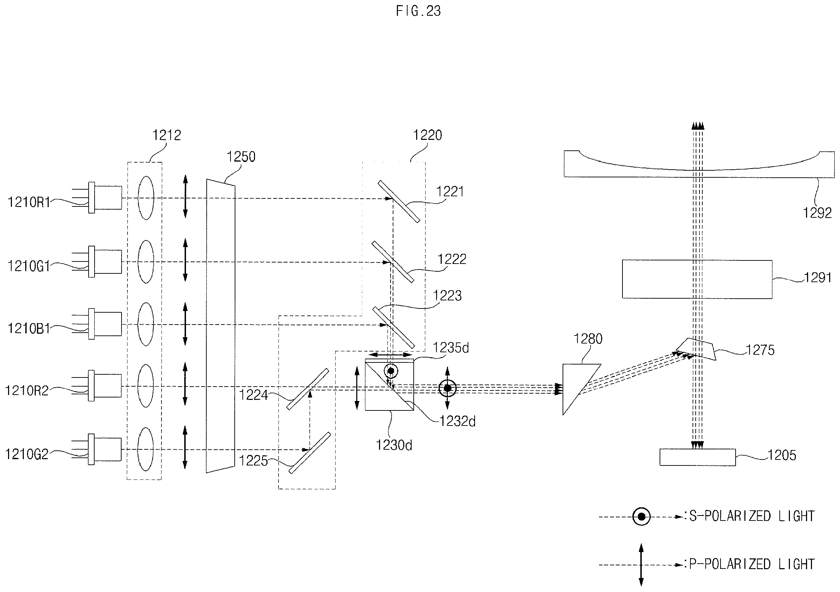

Next, FIG. 23 is a diagram illustrating the optical engine module 1200 according to another embodiment of the present invention, and description thereof will be made below based on differences from the above-described embodiments. In particular, FIG. 23 illustrates the laser light sources 1210R1, 1210G1, 1210B1, 1210R2, and 1210G2 of the light source unit 1210 outputting P-polarized light.

Referring to FIG. 23, the light synthesizer 1230d according to the embodiment of the present invention includes a PBS surface 1232d and a 1/2 wavelength plate 1235d. In the embodiment, the front side of the light synthesizer 1230d, to which the 1/2 wavelength plate 1235d is directed, is disposed toward the plurality of mirrors 1221, 1222, and 1223; and the second red laser diode 1210R2, the second green laser diode 1210G2, and the mirrors 1224 and 1225 disposed corresponding thereto are disposed at the lateral side of the light synthesizer 1230c. Further, the 1/2 wavelength plate 1235d and the PBS surface 1232d are arranged so as to be inclined at 45 degrees.

Referring to FIG. 23, P-polarized light, output from the first red laser diode 1210R1, the first green laser diode 1210G1, and the first blue laser diode 1210B1, may pass through the corresponding mirrors 1221, 1222, and 1223, to be incident on the 1/2 wavelength plate 1235d of the light synthesizer 1230d. Further, referring to FIG. 23, P-polarized light, output from the second red laser diode 1210R2 and the second green laser diode 1210G2, may pass through the mirrors 1224 and 1225 corresponding thereto, to be incident on the PBS surface 1232d of the light synthesizer 1230d.

In this instance, P-polarized light, incident on the 1/2 wavelength plate 1235d, is converted into S-polarized light, which is synthesized with the remaining P-polarized light on the PBS surface 1232d. Thus, speckle is reduced, as the light synthesizer 1230d synthesizes S-polarized light and P-polarized light, and outputs the synthesized light.

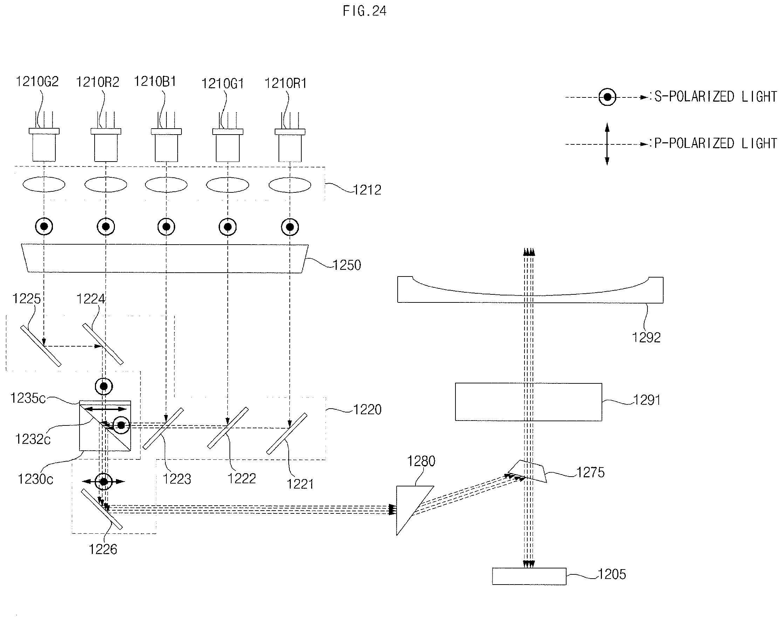

FIG. 24 is a diagram illustrating the optical engine module 1200 according to another embodiment of the present invention, and description thereof will be made below based on differences from the above-described embodiments. In particular, FIG. 24 illustrates the assembly position of the laser light sources 1210R1, 1210G1, 1210B1, 1210R2, and 1210G2 of the light source unit 1210 in the optical engine module 1200 being changed by rotating by 90 degrees, and S-polarized light is output.

Referring to FIG. 24, the light synthesizer 1230c according to the embodiment of the present invention includes a PBS surface 1232c and a 1/2 wavelength plate (HWP) 1235c. Referring to FIG. 24, the front side of the light synthesizer 1230c, to which the 1/2 wavelength plate 1235c is directed, is disposed toward the second red laser diode 1210R2, the second green laser diode 1210G2, and the mirrors 1224 and 1225 disposed corresponding thereto; and the plurality of mirrors 1221, 1222, and 1223 are disposed at the lateral side of the light synthesizer 1230c.

Further, the 1/2 wavelength plate 1235c and the PBS surface 1232c are arranged so as to be inclined at 45 degrees. However, by comparing the embodiment of FIG. 24 with the embodiments of FIG. 22, it can be seen that the assembly position of the laser light sources 1210R1, 1210G1, 1210B1, 1210R2, and 1210G2 rotates by 90 degrees, such that the light synthesizer 1230a also rotates by 90 degrees to be assembled therewith.

Referring to FIG. 24, the mirror unit 1220 may further include a mirror 1226 which reflects light output from the light synthesizer 1230c to the prism element 1280. Referring to FIG. 24, S-polarized light, output from the first red laser diode 1210R1, and the first green laser diode 1210G1, and the first blue laser diode 1210B1 pass through the mirrors 1221, 1222, and 1223 corresponding thereto, to be incident on the PBS surface 1232c of the light synthesizer 1230c.

Further, referring to FIG. 24, S-polarized light, output from the second red laser diode 1210R2 and the second green laser diode 1210G2, pass through the corresponding mirrors 1224 and 1225, to be incident on the 1/2 wavelength plate 1235c of the light synthesizer 1230c. In this instance, S-polarized light, incident on the 1/2 wavelength plate 1235c, is converted into P-polarized light, which is synthesized with the remaining S-polarized light on the PBS surface 1232c. Thus, speckle is reduced, as the light synthesizer 1230c synthesizes S-polarized light and P-polarized light, and outputs the synthesized light.

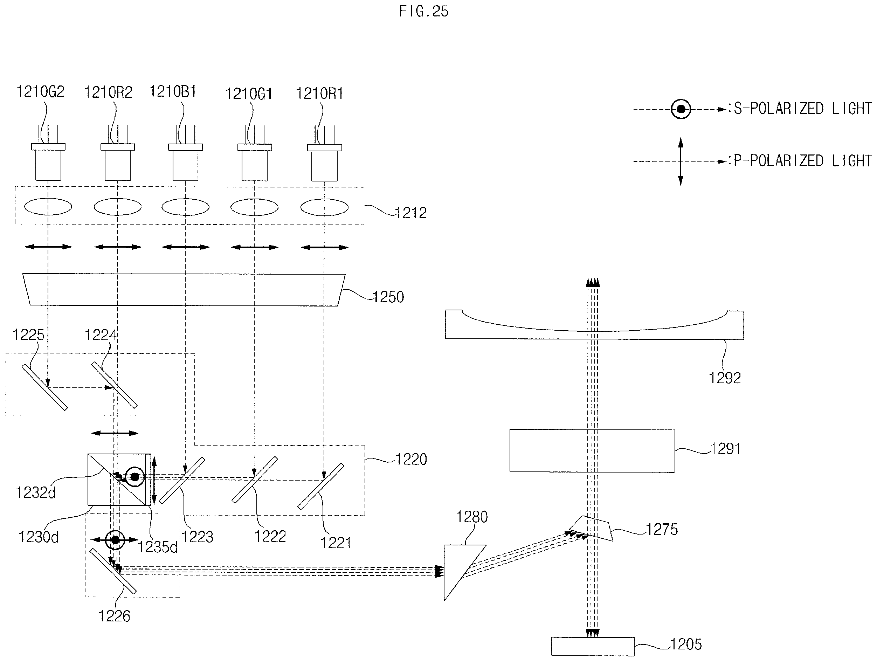

FIG. 25 is a diagram illustrating the optical engine module 1200 according to another embodiment of the present invention, and description thereof will be made below based on differences from the above-described embodiments. FIG. 25 illustrates the assembly position of the laser light sources 1210R1, 1210G1, 1210B1, 1210R2, and 1210G2 of the light source unit 1210 in the optical engine module 1200 being changed by rotating by 90 degrees, and P-polarized light is output.

Referring to FIG. 25, the light synthesizer 1230d according to the embodiment of the present invention includes a PBS surface 1232d and a 1/2 wavelength plate (HWP) 1235d. Further, the mirror unit 1220 may further include a mirror 1226 which reflects light output from the light synthesizer 1230d to the prism element 1280.

Referring to FIG. 25, the light synthesizer 1230d according to the embodiment of the present invention includes a PBS surface 1232d and a 1/2 wavelength plate 1235d. In addition, the front side of the light synthesizer 1230d, to which the 1/2 wavelength plate 1235d is directed, is disposed toward the plurality of mirrors 1221, 1222, and 1223; and the second red laser diode 1210R2, the second green laser diode 1210G2, and the mirrors 1224 and 1225 disposed corresponding thereto are disposed at the lateral side of the light synthesizer 1230d.

Further, the 1/2 wavelength plate 1235d and the PBS surface 1232d are arranged so as to be inclined at 45 degrees. However, by comparing the embodiment of FIG. 25 with the embodiments of FIG. 22, it can be seen that the assembly position of the laser light sources 1210R1, 1210G1, 1210B1, 1210R2, and 1210G2 rotates by 90 degrees, such that the light synthesizer 1230d also rotates by 90 degrees to be assembled therewith.

Referring to FIG. 25, P-polarized light, output from the first red laser diode 1210R1, the first green laser diode 1210G1, and the first blue laser diode 1210B1, pass through the corresponding mirrors 1221, 1222, and 1223, to be incident on the 1/2 wavelength plate 1235d of the light synthesizer 1230d. Further, P-polarized light, output from the second red laser diode 1210R2 and the second green laser diode 1210G2, pass through the corresponding mirrors 1224 and 1225, to be incident on the PBS surface 1232d of the light synthesizer 1230d.

In this instance, P-polarized light, incident on the 1/2 wavelength plate 1235d, is converted into S-polarized light, which is synthesized with the remaining S-polarized light on the PBS surface 1232c. Thus, speckle can be reduced, as the light synthesizer 1230d synthesizes S-polarized light and P-polarized light, and outputs the synthesized light.

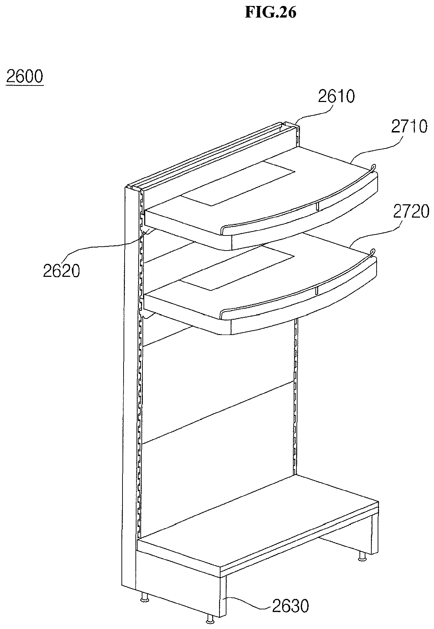

FIG. 26 is a diagram illustrating a display stand 2600 according to an embodiment of the present invention. Referring to FIG. 26, the display stand 2600 includes a plurality of shelf display modules 2710 and 2720 each including a scanning projector; one or more arms 2620 connected with the shelf display modules 2710 and 2720; a main frame 2610 disposed perpendicular to the arm 2620; and a support 2630 connected with the main frame 2610.

Here, the arms 2620 may include grooves connected to a lateral structure of the shelf display modules 2710 and 2720. Further, the arms 2620 can be sequentially disposed on a side surface of the main frame 2610 at a predetermined distance apart from each other in a vertical direction. The main frame 2610 and the arms 2620 can be integrally formed, or may be assembled after being manufactured separately.

Referring to FIG. 26, the display stand 2600 may include a plurality of shelf display modules 2710 and 2720 which are disposed on one side surface of the main frame 2610. Each of the plurality of shelf display modules 2710 and 2720 includes a shelf case having an accommodation space; a screen disposed on a front surface of the accommodation space; and a scanning projector which is disposed inside the accommodation space and projects a predetermined image onto the screen.

The scanning projector, the shelf display module, and a method of operating the same according to the disclosure are not limited to the configurations and methods of the above described embodiments, and all or some of the embodiments may be selectively combined to achieve various modifications.

Meanwhile, the scanning projector and a method of operating the shelf display module according to embodiments of the present invention can be implemented as processor-readable code in recording media readable by a processor. The processor-readable recording media include all types of recording devices in which processor-readable data may be stored. Examples of the processor-readable recording media include Read Only Memory (ROM), Random Access Memory (RAM), a Compact Disc (CD)-ROM, magnetic tape, a floppy disc, an optical data storage device, etc., and also include a medium realized in the form of a carrier wave, for example, transmission performed over the Internet. Further, the processor-readable recording media may be distributed to computer systems connected through a network and processor-readable code may be stored and executed in the computer systems in a distributed manner.

## Claims

1. A scanning projector (1200), comprising:
a light source unit (1210) including a plurality of laser light sources;
a mirror unit (1220) including a plurality of mirrors which transmit or reflect light beams output from the light source unit (1210);
a light synthesizer (1230) which synthesizes the light beams transmitted or reflected by the mirror unit (1220);
a Micro-Electro-Mechanical-System, MEMS, scanner (1240) which reflects incident light and performs scanning of the light in a horizontal direction and a vertical direction; and
a light reflection unit (1275) which reflects light, having passed through the light synthesizer (1230), to the MEMS scanner (1240),
wherein the light synthesizer (1230) includes a 1/2 wavelength plate (1235c) converting a first polarization of the light beams transmitted or reflected by the mirror unit (1220) into a second polarization, and a Polarization Beam Splitter, PBS, surface (1232c) synthesizing the light beams polarization-converted by the 1/2 wavelength plate (1235c) into the second polarization with the light beams having the first polarization,
wherein the 1/2 wavelength plate (1235c) is disposed on a front surface of the light synthesizer (1230) and the PBS surface (1232c) is disposed inside the light synthesizer (1230),
wherein the light source unit (1210) comprises at least five laser diodes including one or more of a red laser diode, a green laser diode, and a blue laser diode;
wherein in response to light, corresponding to the first red laser diode, the first green laser diode, and the first blue laser diode, being incident on the 1/2 wavelength plate (1235c), light corresponding to the remaining laser diodes is directly incident on the PBS surface (1232c); or in response to light, corresponding to the first red laser diode, the first green laser diode, and the first blue laser diode, being directly incident on the PBS surface (1232c), light corresponding to the remaining laser diodes is incident on the 1/2 wavelength plate (1235c); and
wherein the 1/2 wavelength plate (1235c) and the PBS surface (1232c) are arranged so as to be inclined at 45 degrees.

2. The scanning projector of claim 1, wherein the PBS surface (1232c) synthesizes the light beams having the first and second polarizations to reduce speckle.

3. The scanning projector of claim 1 or 2, further comprising:
a prism element (1280) which changes an optical path of light, output from the light synthesizer(1230), to the light reflection unit,
wherein the mirror unit (1220) further comprises a mirror which reflects the light, output from the light synthesizer, to the prism element(1280).

4. The scanning projector of one of claims 1 to 3, further comprising a distortion correction optical system (1291, 1292) disposed in front of the scanner,
wherein the distortion correction optical system (1291, 1292) comprises:
a prism (1291) disposed in front of the scanner; and
a diverging lens unit (1292) disposed in front of the prism (1291).

5. The scanning projector of claim 4, wherein the diverging lens unit (1292) comprises a diverging lens with a concave lens formed at least one surface thereof, and a chromatic aberration correction lens with an aspheric lens formed at least one surface thereof.

6. The scanning projector of claim 4, wherein the diverging lens unit (1292) is formed as an aspheric lens including a front surface and a rear surface, the front surface of the aspheric lens having a higher degree of asphericity than the rear surface.

7. The scanning projector of one of claims 1 to 6, wherein two mirrors, which are disposed at an outermost side of the mirror unit (1220) among the plurality of mirrors, are total mirrors; and the remaining mirrors are dichroic mirrors.

## Patentansprüche

1. Abtastprojektor (1200), bestehend aus:
eine Lichtquelleneinheit (1210) mit einer Mehrzahl von Laserlichtquellen;
eine Spiegeleinheit (1220) mit einer Mehrzahl von Spiegeln, die von der Lichtquelleneinheit (1210) ausgegebene Lichtstrahlen übertragen oder reflektieren;
einen Lichtsynthesizer (1230), der die von der Spiegeleinheit (1220) übertragenen oder reflektierten Lichtstrahlen synthetisiert;
einen MEMS-Scanner (Micro-Electro-Mechanical-System Scanner) (1240), der einfallendes Licht reflektiert und das Licht in einer horizontalen und einer vertikalen Richtung ablenkt; und
eine Lichtreflexionseinheit (1275), die Licht, das den Lichtsynthesizer (1230) passiert hat, zu dem MEMS-Scanner (1240) reflektiert,
wobei der Lichtsynthesizer (1230) eine 1/2-Wellenlängenplatte (1235c), die eine erste Polarisation der von der Spiegeleinheit (1220) übertragenen oder reflektierten Lichtstrahlen in eine zweite Polarisation umwandelt, und eine Polarisationsstrahlteiler-, PBS, -Oberfläche (1232c) enthält, die die von der 1/2-Wellenlängenplatte (1235c) in die zweite Polarisation umgewandelten Lichtstrahlen mit den Lichtstrahlen der ersten Polarisation synthetisiert,
wobei die 1/2-Wellenlängenplatte (1235c) auf einer vorderen Oberfläche des Lichtsynthesizers (1230) angeordnet ist und die PBS-Oberfläche (1232c) innerhalb des Lichtsynthesizers (1230) angeordnet ist,
wobei die Lichtquelleneinheit (1210) mindestens fünf Laserdioden umfasst, darunter eine oder mehrere einer roten Laserdioden, einer grünen Laserdiode und einer blauen Laserdiode;
wobei als Reaktion auf Licht, das der ersten roten Laserdiode, der ersten grünen Laserdiode und der ersten blauen Laserdiode entspricht und das auf die 1/2-Wellenlängenplatte (1235c) einfällt, Licht, das den übrigen Laserdioden entspricht, direkt auf die PBS-Oberfläche (1232c) einfällt; oder als Reaktion auf Licht, das der ersten roten Laserdiode, der ersten grünen Laserdiode und der ersten blauen Laserdiode entspricht und das direkt auf die PBS-Oberfläche (1232c) einfällt, Licht, das den verbleibenden Laserdioden entspricht, auf die 1/2-Wellenlängenplatte (1235c) einfällt; und
wobei die 1/2-Wellenlängenplatte (1235c) und die PBS-Fläche (1232c) so angeordnet sind, dass sie um 45 Grad geneigt sind.

2. Abtastprojektor gemäß Anspruch 1, wobei die PBS-Oberfläche (1232c) die Lichtstrahlen mit den ersten und zweiten Polarisationen synthetisiert, um Speckle zu reduzieren.

3. Abtastprojektor gemäß Anspruch 1 oder 2, ferner umfassend:
ein Prismaelement (1280), das den optischen Weg des vom Lichtsynthesizer (1230) ausgegebenen Lichts zur Lichtreflexionseinheit ändert,
wobei die Spiegeleinheit (1220) ferner einen Spiegel umfasst, der das von dem Lichtsynthesizer ausgegebene Licht zu dem Prismaelement (1280) reflektiert.

4. Abtastprojektor gemäß einem der Ansprüche 1 bis 3, ferner ein optisches System zur Verzerrungskorrektur (1291, 1292), das vor dem Scanner angeordnet ist, umfassend,
wobei das optische System zur Verzerrungskorrektur (1291, 1292) umfasst:
ein Prisma (1291), das vor dem Scanner angeordnet ist; und
eine vor dem Prisma (1291) angeordnete Zerstreuungslinseneinheit (1292).

5. Abtastprojektor gemäß Anspruch 4, wobei die Zerstreuungslinseneinheit (1292) eine Zerstreuungslinse mit einer konkaven Linse, die an mindestens einer Oberfläche davon ausgebildet ist, und eine Linse zur Korrektur der chromatischen Aberration mit einer asphärischen Linse, die an mindestens einer Oberfläche davon ausgebildet ist, umfasst.

6. Abtastprojektor gemäß Anspruch 4, wobei die Zerstreuungslinseneinheit (1292) als asphärische Linse mit einer vorderen Fläche und einer hinteren Fläche ausgebildet ist, wobei die vordere Fläche der asphärischen Linse einen höheren Grad an Asphärizität aufweist als die hintere Fläche.

7. Abtastprojektor gemäß einem der Ansprüche 1 bis 6, wobei zwei Spiegel, die an einer äußersten Seite der Spiegeleinheit (1220) unter der Mehrzahl von Spiegeln angeordnet sind, Totalspiegel sind; und die übrigen Spiegel dichroitische Spiegel sind.

## Revendications

1. Projecteur à balayage (1200), comprenant :
une unité de sources lumineuses (1210) comprenant une pluralité de sources de lumière laser ;
une unité de miroirs (1220) comprenant une pluralité de miroirs qui transmettent et réfléchissent les faisceaux lumineux sortant de l'unité de sources lumineuses (1210);
un synthétiseur de lumière (1230) qui synthétise les faisceaux lumineux transmis et réfléchis par l'unité de miroirs (1220) ;
un scanner (1240) à microsystème électromécanique, MEMS, qui réfléchit la lumière incidente et procède au balayage horizontal et vertical de la lumière ; et
une unité de réflexion lumineuse (1275) qui réfléchit la lumière qui a traversé le synthétiseur de lumière (1230) vers le scanner à MEMS (1240),
le synthétiseur de lumière (1230) comprenant une plaque de 1/2 longueur d'onde (1235c) convertissant une première polarisation des faisceaux lumineux transmis ou réfléchis par l'unité de miroirs (1220) en une seconde polarisation, et une surface (1232c) de diviseur de faisceau de polarisation, PBS, synthétisant les faisceaux lumineux convertis par polarisation par la plaque de 1/2 longueur d'onde (1235c) dans la seconde polarisation avec les faisceaux lumineux ayant la première polarisation,
la plaque de 1/2 longueur d'onde (1235c) étant disposée sur une surface avant du synthétiseur de lumière (1230) et la surface PBS (1232c) étant disposée à l'intérieur du synthétiseur de lumière (1230),
l'unité de sources lumineuses (1210) comprenant au moins cinq diodes laser comprenant un ou plusieurs parmi une diode laser rouge, une diode laser verte, et une diode laser bleue ;
en réponse à la lumière, correspondant à la première diode laser rouge, la première diode laser verte et la première diode laser bleue, étant incidente sur la plaque de 1/2 longueur d'onde (1235c), la lumière correspondant aux diodes laser restantes étant directement incidente sur la surface PBS (1232c) ; ou en réponse à la lumière, correspondant à la première diode laser rouge, la première diode laser verte, et la première diode laser bleue, étant directement incidente sur la surface PBS (1232c), la lumière correspondant aux diodes laser restantes étant incidente sur la plaque de 1/2 longueur d'onde (1235c) ; et
la plaque de 1/2 longueur d'onde (1235c) et la surface PBS (1232c) étant disposées de manière à être inclinées à 45 degrés.

2. Projecteur à balayage selon la revendication 1, dans lequel la surface PBS (1232c) synthétisant les faisceaux lumineux a la première et la seconde polarisation pour réduire la granularité.

3. Projecteur à balayage selon la revendication 1 ou 2, comprenant en outre :
un élément de prisme (1280) qui modifie un chemin optique de la lumière, sorti par le synthétiseur de lumière (1230), vers l'unité de réflexion lumineuse,
l'unité de miroirs (1220) comprenant en outre un miroir qui réfléchit la lumière, sortie par le synthétiseur de lumière, vers l'élément de prisme (1280).

4. Projecteur à balayage selon l'une des revendications 1 à 3, comprenant en outre un système optique de correction de distorsion (1291, 1292) disposé devant le scanner,
le système optique de correction de distorsion (1291, 1292) comprenant :
un prisme (1291) disposé devant le scanner ; et
une unité de lentilles divergentes (1292) disposée devant le prisme (1291).

5. Projecteur à balayage selon la revendication 4, dans lequel l'unité de lentilles divergentes (1292) comprend une lentille divergente dont une lentille concave est formée au moins sur sa surface, et une lentille de correction d'aberration chromatique dont une lentille asphérique est formée sur au moins sa surface.

6. Projecteur à balayage selon la revendication 4, dans lequel l'unité de lentilles divergentes (1292) est formée comme une lentille asphérique comprenant une surface avant et une surface arrière, la surface avant de la lentille asphérique ayant un degré d'asphéricité plus élevé que celui de la surface arrière.

7. Projecteur à balayage selon l'une des revendications 1 à 6, dans lequel deux miroirs, qui sont disposés sur un côté le plus à l'extérieur de l'unité de miroirs (1220) parmi la pluralité de miroirs, sont des miroirs totaux, et les miroirs restants étant des miroirs dichroïques.
